(19) Europäisches Patentamt
European Patent Office
Office européen des brevets

(11) EP 0 776 135 B1

(12) FASCICULE DE BREVET EUROPEEN

(45) Date de publication et mention
de la délivrance du brevet:
06.03.2002 Bulletin 2002/10

(51) Int Cl.⁷: H04N 9/75

(21) Numéro de dépôt: 96402510.0

(22) Date de dépôt: 22.11.1996

(54) **Procédé de traitement du signal constitué par un sujet évoluant devant un fond coloré et dispositif mettant en oeuvre ce procédé**

Verfahren und Vorrichtung zur Verarbeitung eines Signals das aus einem sich vor einem farbigen Hintergrund bewegenden Objekt gebildet wird

Method and apparatus for processing a signal consisting of an object evolving on a coloured background

(84) Etats contractants désignés:
DE FR GB

(30) Priorité: 23.11.1995 FR 9513952

(43) Date de publication de la demande:
28.05.1997 Bulletin 1997/22

(73) Titulaire: THOMSON BROADCAST SYSTEMS
95801 Cergy-Pontoise Cedex (FR)

(72) Inventeurs:
• Demay, Alain
92050 Paris la Defense Cedex (FR)
• Le Lan, Michel
92050 Paris la Defense Cedex (FR)

(74) Mandataire: Ruellan-Lemonnier, Brigitte et al
THOMSON multimedia, 46 quai A. Le Gallo
92648 Boulogne Cédex (FR)

(56) Documents cités:
EP-A- 0 014 665          EP-A- 0 074 824
EP-A- 0 285 494          WO-A-91/05443
DE-A- 4 017 878

• IBA TECHNICAL REVIEW, no. 16, Mars 1982, LONDON, GB, pages 57-69, XP002005260 R. RAWLINGS ET AL.: "Chromakey in future studio systems"
• INTERNATIONAL BROADCASTING CONVENTION, Septembre 1984, BRIGHTON, UK, pages 148-152, XP002005261 V.G. DEVEREUX: "Digital chroma-key"
• SIGNAL PROCESSING: IMAGE COMMUNICATION, vol. 5, no. 5/6, Décembre 1993, AMSTERDAM, NE, pages 417-423, XP000426713 F. FECHTER ET AL.: "Signal processing for a digital HDTV chromakey mixer"

## Description

L'invention concerne un procédé d'incrustation sur un nouveau fond coloré d'un sujet issu de la découpe d'une image source.

Plus particulièrement, l'invention concerne un procédé de traitement de l'image source constituée par un sujet évoluant devant un premier fond coloré de façon à améliorer, après incrustation, le rendu de l'image constitué par le sujet évoluant devant le nouveau fond coloré.

L'invention concerne également tout dispositif ou appareil électronique mettant en oeuvre un tel procédé de traitement tels que, par exemple, les mélangeurs vidéo ou encore les dispositifs autonomes de découpe et d'incrustation d'images vidéo communément appelés en anglais "chroma-keyers". De tels dispositifs ou appareils électroniques sont utilisés, par exemple, dans les matériels de studio de télévision.

Comme cela est connu de l'homme de l'art, les procédés d'incrustation comprennent une étape de calcul d'une clé KD de découpe du sujet. L'image vidéo VD représentant le sujet incrusté sur le nouveau fond est alors donnée, dans le cas du mélange multiplicatif, par la fonction :

$$VD = KD \times VS + (1 - KD) \times VF,$$

où VS représente l'image source constituée du sujet évoluant devant le premier fond coloré et VF représente le nouveau fond coloré sur lequel doit être incrusté le sujet.

A la suite de ce mélange, des nuances de la couleur de l'ancien fond subsistent autour du sujet incrusté sur la vidéo fond. Selon l'art connu, ces nuances de couleur sont éliminées par addition, sur le pourtour du sujet, de la couleur complémentaire à la couleur de l'ancien fond. A cette fin, une clé spécifique de décolorisation, calculée en fonction de la valeur de la clé KD de découpe, permet l'addition de la couleur complémentaire à la couleur de l'ancien fond sur le pourtour du sujet. La clé spécifique de décolorisation est prédéterminée à l'aide de gabarits. Il s'ensuit une décolorisation de mauvaise qualité induisant l'apparition d'un pourtour massif masquant les détails du sujet.

Le nouveau procédé de l'invention ne présente pas ces inconvénients.

L'invention concerne un procédé selon la revendication 1 et un appareil pour la mise en oeuvre de ce procédé selon la revendication 19.

De même, l'invention concerne tout appareil électronique, tels que des mélangeurs ou des "chroma-keyers", mettant en oeuvre un procédé selon l'invention.

Un avantage de l'invention est de pouvoir faire disparaître le pourtour massif masquant les détails du sujet.

D'autres caractéristiques et avantages de l'invention apparaîtront à la lecture d'un mode de réalisation préférentiel fait avec référence aux figures ci-annexées, parmi lesquelles :

- la figure 1 représente le schéma synoptique de l'algorithme permettant d'obtenir une image vidéo incrustée représentant un sujet devant un nouveau fond selon l'art antérieur ;
- la figure 2 représente le schéma synoptique de l'algorithme permettant d'obtenir une image vidéo incrustée représentant un sujet devant un nouveau fond selon l'invention ;
- la figure 3 représente le synoptique détaillé d'un premier circuit de la figure 2 ;
- la figure 4 représente un premier synoptique détaillé d'un deuxième circuit de la figure 2 ;
- la figure 5 représente un deuxième synoptique détaillé du deuxième circuit de la figure 2 ;
- la figure 6 représente l'algorithme détaillé d'un troisième circuit de la figure 2 ;
- la figure 7 représente le schéma synoptique de l'algorithme permettant d'obtenir une image vidéo incrustée représentant un sujet devant un nouveau fond selon un exemple particulier de réalisation de l'invention ;
- la figure 8 représente un pixel de l'espace des couleurs dans un nouveau référentiel permettant une approche volumique du premier fond coloré selon l'exemple particulier de réalisation de la figure 7 ;
- la figure 9 représente le volume du premier fond coloré selon l'approche de la figure 8 ;
- la figure 10 représente la vue en coupe du volume du premier fond coloré selon un plan perpendiculaire à un premier axe du nouveau référentiel ;
- la figure 11 représente la vue en coupe du volume du premier fond coloré selon un plan perpendiculaire à un deuxième axe du nouveau référentiel ;
- la figure 12 représente l'algorithme de calcul de la clé de découpe selon l'exemple particulier de réalisation de la figure 7 ;
- la figure 13 représente un perfectionnement du schéma synoptique de la figure 7 ;
- la figure 14 représente une description du perfectionnement décrit en figure 13.

Sur toutes les figures, les mêmes repères désignent les mêmes éléments.

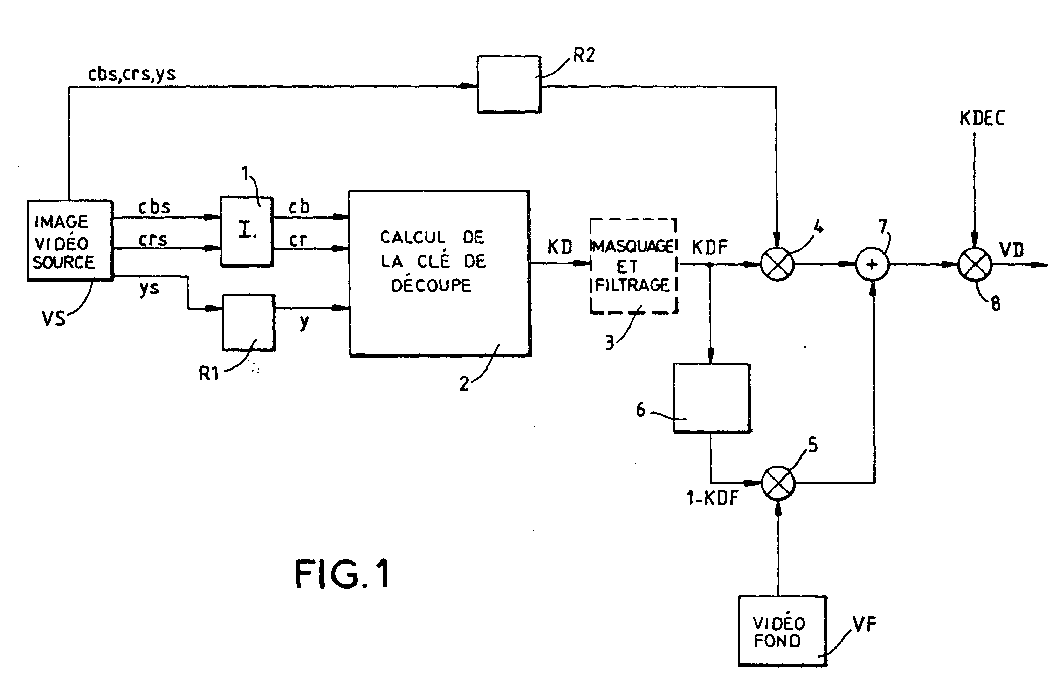

La figure 1 représente le schéma synoptique de l'algorithme permettant d'obtenir une image vidéo incrustée représentant un sujet devant un nouveau fond selon l'art antérieur.

Chaque pixel de l'image vidéo source VS comprend trois composantes cbs, crs, ys respectivement composante chrominance de différence de couleur bleue, composante chrominance de différence de couleur rouge, et composante luminance.

Comme cela est connu de l'homme de l'art, les données de luminance et de chrominance sont au format 4 : 2 : 2. La fréquence d'échantillonnage des composantes luminance est de 13,5 MHz alors que celle des composantes chrominance est de 6,75 MHz. Il est alors nécessaire d'interpoler le train de composantes chrominance cbs, crs qui est au format 2 : 2 en un train de composantes chrominance cb, cr au format 4 : 4. L'opérateur 1 d'interpolation y pourvoit. Les composantes chrominance des pixels de l'image vidéo source VS sont interrompues pendant les suppressions de ligne afin que les composantes interpolées situées en début et en fin de ligne ne soient pas perturbées par le signal de suppression de ligne. Cette interpolation s'effectue de façon connue en soi.

Les échantillons de luminance ys de l'image vidéo source sont retardés par le retard R1 en échantillons de luminance y de façon à compenser le retard pris par les échantillons de chrominance cbs et crs au cours de l'opération 1 d'interpolation.

Les échantillons cb, cr, y sont appliqués à l'opérateur 2 de calcul de la clé de découpe KD. Comme cela est connu de l'homme de l'art, la clé de découpe KD a pour fonction de permettre la distinction entre le premier fond coloré de l'image vidéo source et le sujet lui-même. Il est alors nécessaire de définir dans l'espace des couleurs un volume représentant le premier fond coloré de façon à pouvoir extraire le sujet du premier fond coloré pour l'incruster devant un nouveau fond. L'opération de calcul de la clé de découpe KD est suivie d'une opération 3 de masquage et de filtrage permettant d'éviter qu'une partie des détails qui appartiennent au sujet ne soit assimilée au fond coloré. L'exemple le plus souvent rencontré est la perte de colorimétrie des yeux d'un personnage. L'introduction de l'opération de masquage et de filtrage permet d'invalider localement le niveau de la découpe. Cette opération de masquage est représentée en traits discontinus sur la figure 1 car, bien que fréquente, elle n'est en rien obligatoire.

La clé de découpe finale KDF issue de l'opérateur 3 de masquage et de filtrage est appliquée à un inverseur 6 de façon à transformer l'information KDF en information 1 - KDF. Comme cela est connu de l'homme de l'art, l'opération de mélange est alors réalisée à l'aide de deux multiplicateurs 4 et 5 et d'un sommateur 7.

L'image vidéo source est appliquée au multiplicateur 4 après avoir subi un retard R2 permettant de compenser les retards correspondants aux opérations successives 1, 2 et 3 et la vidéo fond VF est appliquée au multiplicateur 5. Le signal issu de l'additionneur 7 est alors appliqué au multiplicateur 8 qui reçoit par ailleurs la clé de décolorisation KDEC.

Comme cela a été mentionné précédemment, la clé de décolorisation KDEC, calculée en fonction de la clé de découpe KD, permet d'agir sur le pourtour du sujet afin d'assurer la décolorisation de ce pourtour. Le signal vidéo souhaité VD est issu du multiplicateur 8.

Ce procédé comprend de nombreux inconvénients. Outre le fait que la clé de décolorisation est prédéterminée à l'aide de gabarits, ce qui induit une correction masquant les détails du sujet, l'intervention du multiplicateur 8 provoque une dégradation du signal issu de l'additionneur 7.

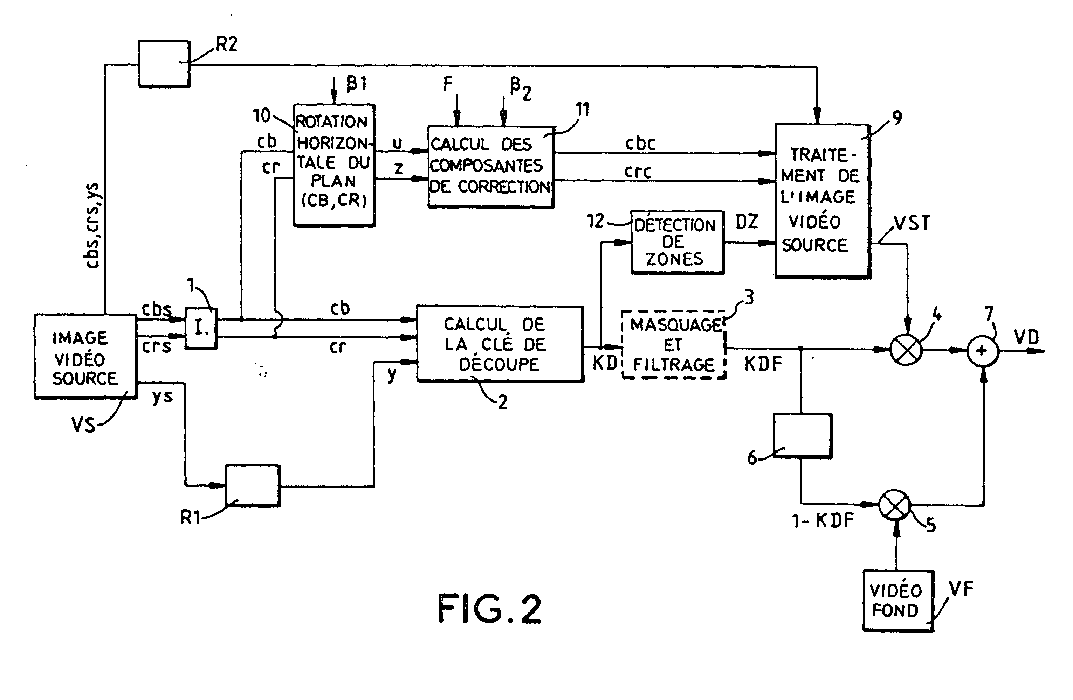

La figure 2 représente le schéma synoptique de l'algorithme permettant d'obtenir une image vidéo incrustée représentant un sujet devant un nouveau fond coloré, selon l'invention.

Sur la figure 2 sont représentés l'opérateur d'interpolation 1, les retards R1 et R2, l'opérateur de calcul de la clé de découpe 2, l'opérateur de masquage et de filtrage 3, l'inverseur 6, les multiplicateurs 4 et 5 ainsi que l'additionneur 7 dont les fonctions essentielles sont identiques à celles décrites en figure 1. Selon l'invention, afin de simplifier le calcul d'interpolation, le niveau achrome qui correspond, par exemple, au niveau 512 pour un signal vidéo codé sur 10 bits est converti en zéro arithmétique par inversion de la valeur du bit de poids fort. Les échantillons de luminance y sont alors translatés d'échelle de façon à faire correspondre le zéro de luminance avec le zéro arithmétique et sont codés sur un nombre de bits identique à celui des échantillons de chrominance cb, cr.

Selon l'invention, la décolorisation est effectuée par un opérateur de traitement 9 de l'image vidéo source. Selon le mode de réalisation préférentiel de l'invention, le traitement de l'image vidéo source consiste à effectuer une correction colorimétrique par addition, sur chacune des composantes chrominance de différence de couleurs bleue et rouge de chaque pixel de la zone de transition, de la quantité de couleur complémentaire nécessaire pour rendre sensiblement achrome les pixels de cette zone.

Ainsi une composante chrominance de différence de couleur bleue de correction cbc est-elle appliquée à chaque composante chrominance de différence de couleur bleue de chaque pixel de la zone de transition et, de même, une composante chrominance de différence de couleur rouge de correction crc est-elle appliquée à chaque composante chrominance de différence de couleur rouge de chaque pixel de la zone de transition.

Un opérateur 12 de détection de zones génère un signal DZ appliqué à l'opérateur de traitement 9 de l'image vidéo source de façon à permettre l'application des composantes de correction cbc, crc aux seuls pixels de la zone de transition.

Le signal vidéo appliqué au multiplicateur 4 est alors un signal vidéo sujet VST issu du traitement de l'image vidéo source VS et l'équation de mélange selon l'invention fournit la vidéo souhaitée VD telle que :

$$VD = KDF \times VST + (1 - KDF) \times VF,$$

ou encore

$$VD = KD \times VST + (1 - KD) \times VF$$

dans le cas où l'opération 3 de masquage et de filtrage n'est pas réalisée.

Avantageusement, la décolorisation est effectuée avant l'opération de mélange.

Les composantes chrominance de correction cbc et crc qui sont appliquées à l'opérateur de traitement de la vidéo sujet sont issues d'un opérateur 11, lequel reçoit en entrée les composantes u et z représentant les coordonnées chrominance d'un pixel dans le plan (U, Z) issu de la rotation 10 d'angle β1 du plan chrominance (CB, CR).

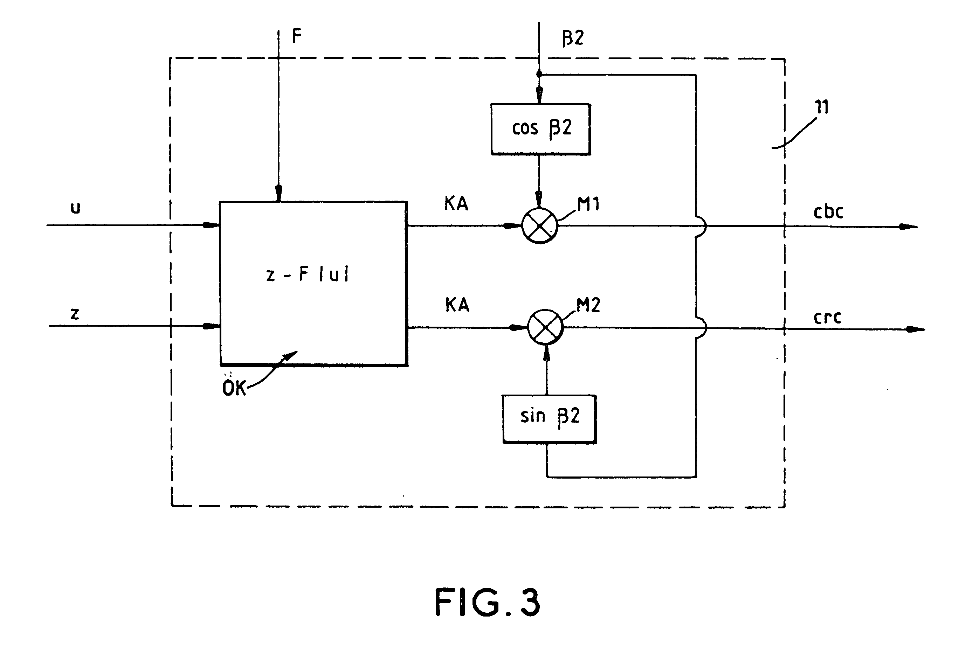

L'opérateur 11 de calcul des composantes de correction sera décrit en figure 3.

L'opérateur 10 de rotation horizontale d'angle β1 du plan chrominance (CB, CR) permet de définir les deux nouveaux axes U et Z. Ainsi, par rotation d'angle β1, l'axe CR donne-t-il le nouvel axe Z qui pointe dans la direction de la teinte d'un point du fond coloré et l'axe CB donne-t-il le nouvel axe U perpendiculaire à l'axe Z de façon que le trièdre (U, Z, Y), où Y représente l'axe des luminances de l'espace des couleurs (CB, CR, Y), soit un trièdre direct.

La rotation horizontale du plan (CB, CR) est réalisée en deux temps. Dans un premier temps, le microprocesseur charge les informations $\sin(\beta 1)$ et $\cos(\beta 1)$ pendant la suppression de trame et un multiplicateur effectue le calcul des produits $cr \times \cos(\beta 1)$, $cr \times \sin(\beta 1)$, $cb \times \cos(\beta 1)$, et $cb \times \sin(\beta 1)$, pour chaque point de l'image, pendant la trame active. Les informations u et z circulent à la fréquence de 13,5 MHz. Les informations $\cos(\beta 1)$, $\sin(\beta 1)$ circulent à la fréquence de 27 MHz. Il s'ensuit qu'en sortie du multiplicateur les informations sont multiplexées à la fréquence de 27 MHz.

Dans un deuxième temps, les informations multiplexées à la fréquence de 27 MHz sont démultiplexées et matricées pour obtenir les signaux u et z à la fréquence de 13,5 MHz.

La relation matricielle s'écrit :

$$\begin{pmatrix} u \\ z \end{pmatrix} = \begin{pmatrix} \cos(\beta 1) & \sin(\beta 1) \\ -\sin(\beta 1) & \cos(\beta 1) \end{pmatrix} \begin{pmatrix} cb \\ cr \end{pmatrix}$$

La figure 3 décrit l'opération 11 de calcul des composantes de correction cbc et crc.

Selon le mode de réalisation préférentiel de l'invention, le dosage de la quantité de couleur complémentaire est calculé à l'aide d'une clé de décolorisation KA telle que :

$$KA = z - F\,|u|,$$

où z et u sont les coordonnées de chaque pixel selon les axes respectifs Z et U, lui désignant la valeur absolue de la quantité u.

F est un paramètre de réglage de la valeur de KA. Il permet avantageusement de moduler la valeur de KA selon la valeur de lul, c'est-à-dire selon la distance séparant le pixel de l'axe Z.

Ainsi, à F et lul constantes, la valeur de KA croît-elle avec l'accroissement de z alors que, à z et F constantes, la valeur de KA diminue-t-elle lorsque lul croît.

Avantageusement, selon l'invention, il s'ensuit que, par exemple, lors de mouvements du sujet devant le premier fond coloré, les composantes chrominance de correction cbc et crc prennent des valeurs permettant de s'adapter à la variation des composantes chrominance des pixels de la zone de transition.

La clé KA issue de l'opérateur OK est appliquée à deux multiplicateurs M1, M2. Sur le multiplicateur M1 est appliqué, par ailleurs, la quantité $\cos(\beta 2)$ et sur le multiplicateur M2 la quantité $\sin(\beta 2)$, où l'angle $\beta 2 = \beta 1 + \pi$. Il s'ensuit que les échantillons de correction de chrominance bleue cbc et de correction de chrominance rouge crc issus des multiplicateurs respectifs M1 et M2 contiennent la proportion désirée de couleur complémentaire à ajouter aux composantes de chrominance respectivement bleue et rouge des pixels de la vidéo sujet appartenant à la zone de transition.

Avantageusement, la correction est ainsi adaptée à chaque pixel.

Selon le mode de réalisation préférentiel de l'invention, la clé de décolorisation s'écrit KA = z - F |u|. Cependant, l'invention concerne plus généralement tout type de clé permettant de générer des échantillons de correction cbc et crc destinés à être ajoutés aux composantes de chrominance respectivement bleue et rouge de chaque pixel de la vidéo sujet appartenant à la zone de transition de façon à rendre sensiblement achromes ces pixels.

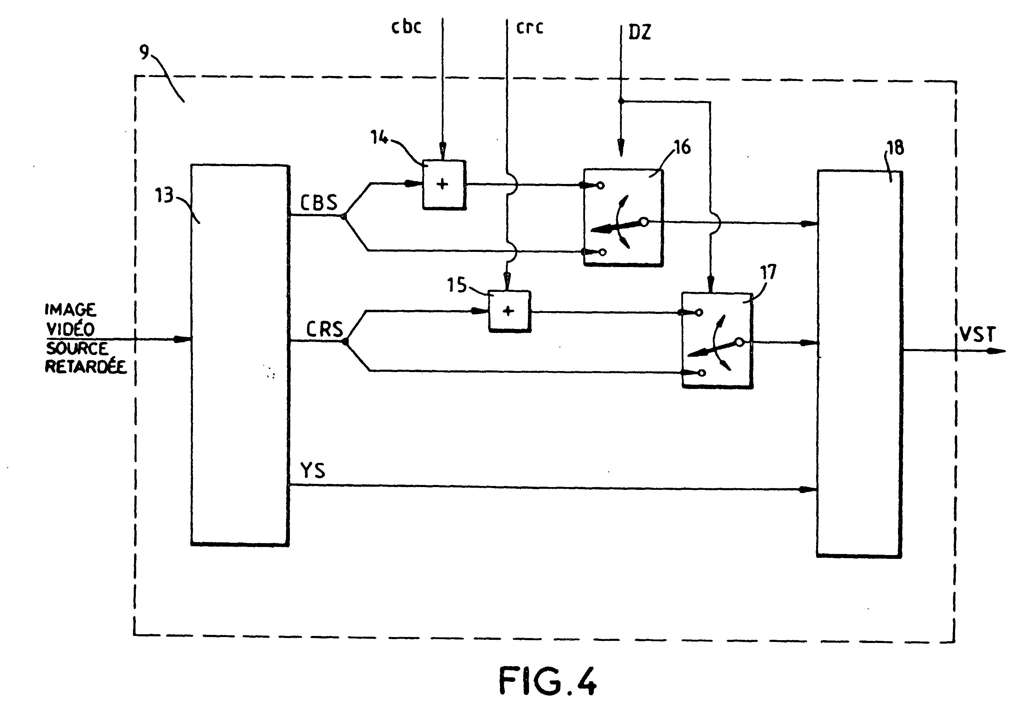

La figure 4 représente un premier mode de réalisation de l'opérateur de traitement de la vidéo sujet, selon l'invention.

Un démultiplexeur 13 reçoit le signal représentant l'image vidéo source retardée afin de transformer les composantes chrominance et luminance qu'il reçoit en composantes chrominance CBS et CRS et en composante luminance YS. Le démultiplexeur 13 permet de modifier de façon connue en soi la fréquence des informations qu'il reçoit. Dans l'application présente, la fréquence des informations reçues par le démultiplexeur est de 27 MHz et la fréquence des composantes chrominance CBS et CRS et luminance YS est de 13,5 MHz. Cependant, d'autres fréquences correspondant à d'autres applications sont envisageables.

Chaque composante chrominance (respectivement CBS et CRS) issue du démultiplexeur 13 est reliée par deux voies différentes aux deux bornes d'entrée d'un interrupteur (respectivement 16 et 17) dont la borne de sortie est reliée à un multiplexeur 18.

L'une de ces deux voies relie chaque composante chrominance (respectivement CBS et CRS) à une première borne d'entrée de chaque interrupteur par l'intermédiaire d'un circuit d'addition (respectivement 14 et 15) permettant d'ajouter à la composante chrominance qu'il reçoit la composante chrominance de correction (respectivement cbc et crc) de façon à rendre sensiblement achrome la composante chrominance issue du circuit d'addition.

La deuxième voie relie directement chaque composante chrominance à la deuxième borne d'entrée de chaque interrupteur.

Les deux interrupteurs 16 et 17 possèdent chacun une sortie et sont commandés par le signal DZ issu de l'opérateur 12 de détection de zones. Quand l'information issue de l'opérateur 12 indique que le pixel à traiter appartient à la zone de transition, l'interrupteur a sa sortie reliée à la borne d'entrée qui recueille la composante chrominance corrigée.

Quand l'information issue de l'opérateur 12 indique que le pixel à traiter n'est pas dans la zone de transition, l'interrupteur a sa sortie reliée à la borne d'entrée qui recueille la composante chrominance issue directement du démultiplexeur 13.

La composante luminance YS issue du démultiplexeur 13 est, quant à elle, reliée directement au multiplexeur 18.

Un avantage de l'invention est de pouvoir effectuer ou non une correction sur chaque pixel selon que cette correction s'avère ou non nécessaire. Il s'ensuit la disparition de l'effet de pourtour massif mentionné précédemment. Le rendu du sujet après incrustation s'en trouve très avantageusement amélioré.

Le multiplexeur 18 permet de modifier de façon connue en soi la fréquence des informations qu'il reçoit. Dans l'application présente, la fréquence des informations reçues par le multiplexeur 18 est de 13,5 MHz et la fréquence des informations qu'il restitue, lesquelles informations constituent le signal vidéo traité VST, est de 27 MHz. Comme cela a été mentionné précédemment, d'autres fréquences correspondant à d'autres applications sont cependant envisageables.

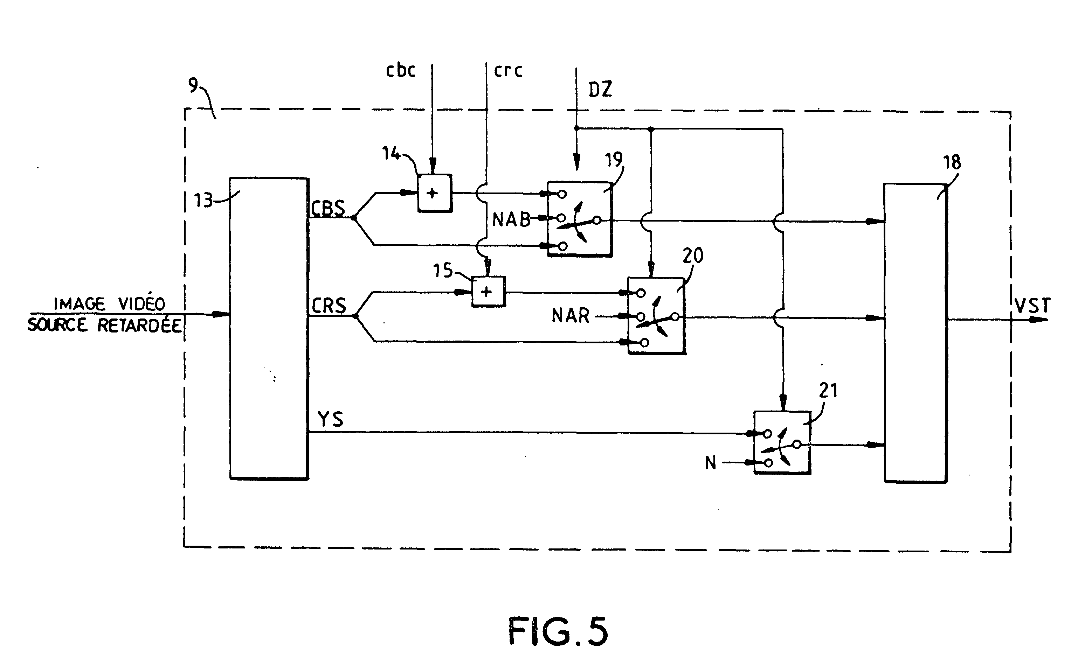

La figure 5 représente un deuxième mode de réalisation de l'opérateur de traitement de la vidéo sujet, selon l'invention.

Selon ce mode de réalisation, les interrupteurs 16 et 17 sont remplacés par les interrupteurs respectifs 19 et 20 ayant chacun trois bornes d'entrée et une sortie reliée au multiplexeur 18. Parmi ces trois bornes d'entrée, deux sont identiques à celles relatives aux interrupteurs 16 et 17 et sont donc respectivement reliées aux composantes chrominance corrigée et non corrigée. La troisième borne d'entrée est reliée, quant à elle, à un niveau achrome ; il s'agit du niveau achrome de bleu NAB pour l'interrupteur 19 et du niveau achrome de rouge NAR pour l'interrupteur 20.

En ce qui concerne la composante de luminance YS, elle est reliée, selon ce mode de réalisation, à la première borne d'entrée d'un interrupteur 21 dont la deuxième borne d'entrée est reliée au niveau N de noir de luminance et dont la borne de sortie est reliée au multiplexeur 18. Tous les autres éléments constituant l'opérateur de traitement de la vidéo sujet selon le deuxième mode de réalisation de la figure 5 sont identiques à ceux de la figure 4.

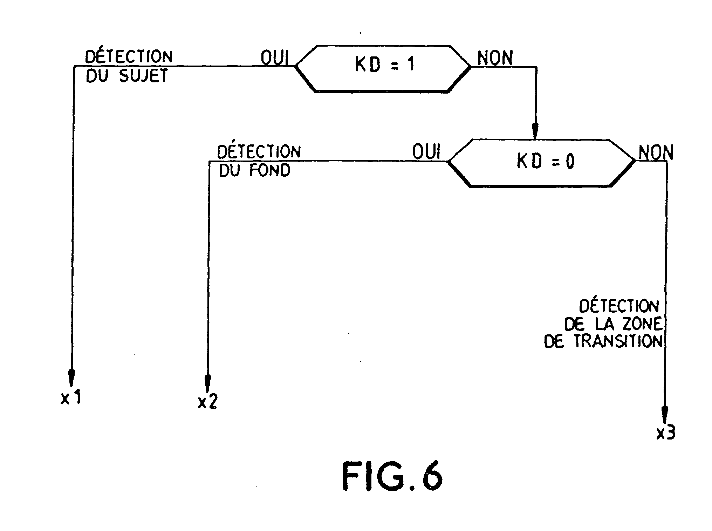

Les interrupteurs 19, 20 et 21 sont commandés par le signal DZ issu de l'opérateur 12 de détection de zones, dont l'organigramme est décrit en figure 6.

Selon ce mode de réalisation, le signal DZ fournit toutes les informations permettant de localiser les pixels de la vidéo sujet selon leur position dans l'espace des couleurs.

Quand le signal DZ prend une valeur traduisant la détection du sujet, les interrupteurs 19, 20 et 21 relient directement les différentes composantes CBS, CRS et YS aux entrées du multiplexeur 18. Quand le signal DZ prend une valeur traduisant la détection du fond, les sorties des interrupteurs 19, 20 et 21 sont reliées aux bornes d'entrée respectives NAB, NAR et N. Enfin, quand le signal DZ prend une valeur traduisant la détection de la zone de transition, les sorties des interrupteurs 19 et 20 sont reliées aux bornes d'entrée sur lesquelles sont appliquées les composantes de chrominance corrigées et la sortie de l'interrupteur 21 est reliée à la borne d'entrée qui reçoit la composante de luminance YS.

La figure 6 représente l'organigramme de l'opérateur de détection de zones. Comme cela apparaît en figure 2, l'opérateur de détection de zones est commandé par la valeur de la clé KD issue du calcul 2 de la clé de découpe. Cet organigramme s'exprime comme suit :

Si la clé KD a pour valeur 1, l'information DZ prend une valeur x1 traduisant la détection du sujet.

Si la clé KD a pour valeur 0, l'information DZ prend une valeur x2 traduisant la détection du fond.

Si la clé KD n'a pas pour valeur 0, l'information DZ prend une valeur x3 traduisant la détection de la zone de transition entre fond et sujet.

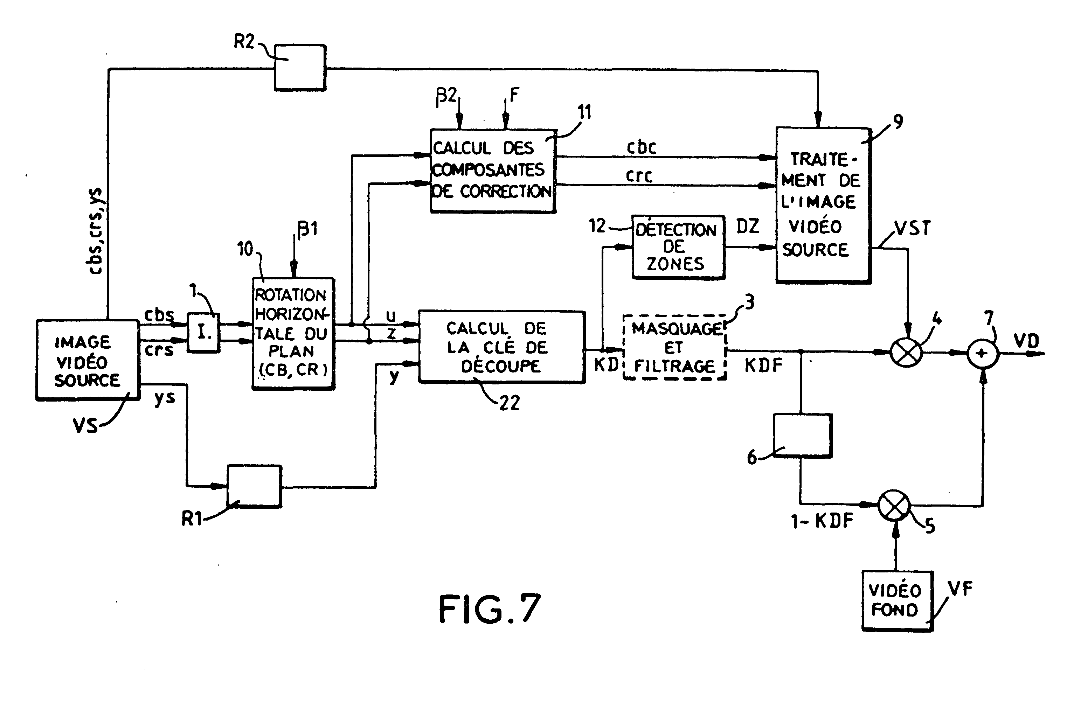

La figure 7 représente le schéma synoptique de l'algorithme permettant d'obtenir une image vidéo incrustée représentant un sujet devant un nouveau fond selon un exemple particulier de réalisation de l'invention.

Cet exemple correspond au cas où le calcul de la clé de découpe 22 est effectué à partir des trois composantes u, z, y.

Sur le schéma de la figure 7, tous les opérateurs autres que l'opérateur 22 de calcul de la clé de découpe sont identiques aux opérateurs représentés en figure 2.

Comme cela a été mentionné précédemment, il est nécessaire de définir dans l'espace des couleurs un volume représentant le premier fond coloré de façon à pouvoir extraire le sujet du premier fond coloré.

Selon l'exemple de la figure 7, l'opérateur 22 de calcul de la clé de découpe correspond à une nouvelle approche volumique du premier fond coloré de façon à intégrer au mieux les détails du sujet.

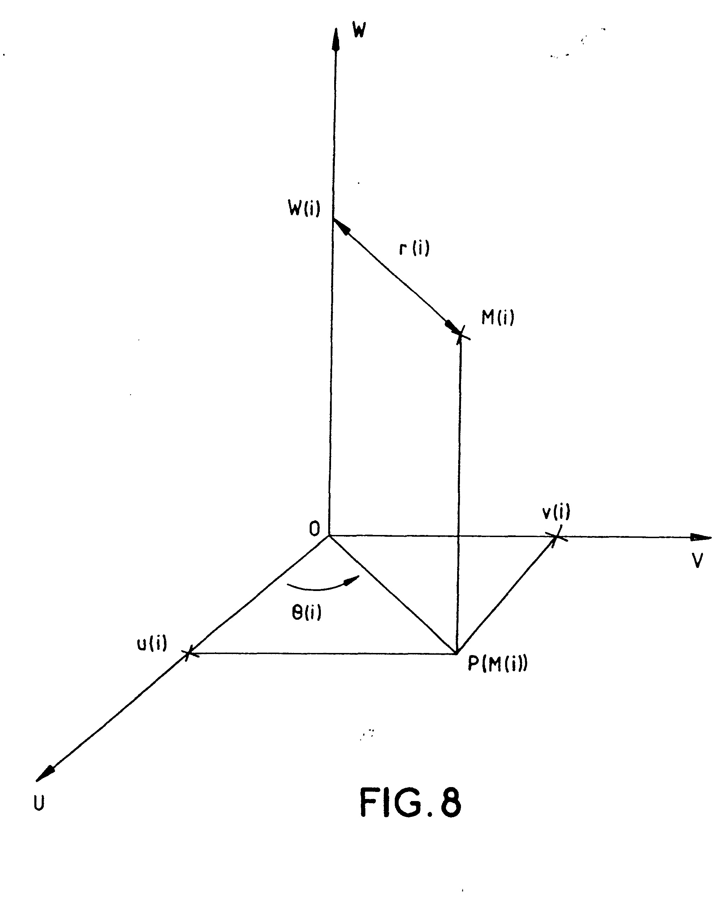

La figure 8 représente un pixel de l'espace des couleurs dans le nouveau référentiel (U, V, W) permettant l'approche volumique du premier fond coloré, selon l'exemple particulier de réalisation de l'invention.

Le nouveau référentiel (U, V, W) est issu d'une rotation d'angle y du plan (Z, Y) autour de l'axe U. L'angle de rotation y est tel que l'axe Y devient l'axe W qui pointe dans la direction d'un pixel de couleur du premier fond coloré et l'axe Z devient l'axe V perpendiculaire à l'axe W de façon que le trièdre (U, V, W) soit un trièdre direct.

Ce changement de repère peut s'exprimer sous forme matricielle par la relation :

$$\begin{pmatrix} w \\ v \end{pmatrix} = \begin{pmatrix} \cos(\gamma) & \sin(\gamma) \\ \sin(\gamma) & -\cos(\gamma) \end{pmatrix} \begin{pmatrix} z \\ y \end{pmatrix}$$

Le pixel M(i) représenté en figure 8 a une composante suivant chacun des trois axes U, V, W soit, respectivement, les composantes u(i), v(i), w(i).

Les coordonnées cylindriques du point M(i) dans le repère (U, V, W) sont : r(i), θ(i) et w(i). Comme cela est connu, il vient :

$$r(i) = \sqrt{u(i)^2 + v(i)^2}$$

et

$$\theta(i) = (\vec{U}, \vec{O}P(Mi))$$

où le point P(Mi) est la projection du point M(i) sur le plan (U, V).

Dans la suite de la description, la distance r(i) sera appelée distance chrominance du point M(i) par rapport à l'axe W.

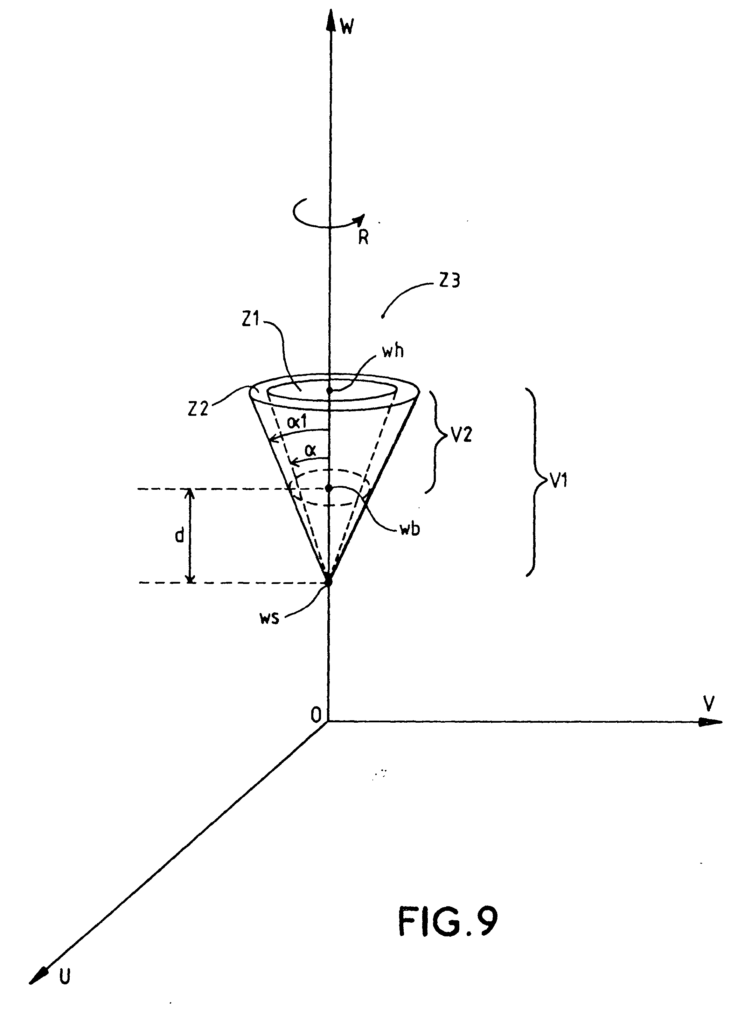

La figure 9 représente l'approche volumique du premier fond coloré selon l'exemple de la figure 7.

Le volume qui représente le premier fond coloré a la forme d'un cône entier (volume V1) ou tronqué (volume V2) dans l'espace des couleurs référencé par rapport au nouveau repère (U, V, W) déduit du repère (CB, CR, Y) par les transformations géométriques décrites précédemment. L'espace des couleurs est divisé en trois zones : la zone Z1 qui représente le fond coloré, la zone Z3 qui représente le sujet et la zone Z2 qui représente la transition entre le sujet et le fond coloré.

Le cône représentant le premier fond coloré est défini par une ouverture angulaire α, un sommet situé à l'abscisse ws sur l'axe W, une section elliptique ou circulaire. Un seuil de luminance haut, d'abscisse wh supérieure à ws sur l'axe W, permet de définir la face opposée au sommet du cône. Un seuil de luminance bas, d'abscisse wb située entre ws et wh sur l'axe W, permet de définir la face tronquée située à la distance d du sommet d'abscisse ws. L'abscisse wb peut coïncider avec l'abscisse ws. Selon l'invention, le cône peut tourner d'un angle R variant de 0 à $\pi$ autour de l'axe W.

La zone de transition Z2 est définie par l'espace compris entre la surface du cône d'ouverture $\alpha$ et la surface d'un cône d'ouverture $\alpha$1 supérieure à $\alpha$, de même axe de symétrie et de même sommet que le cône d'ouverture $\alpha$ et dont la face opposée au sommet du cône est dans le même plan que la face opposée au sommet du cône d'ouverture $\alpha$.

La zone Z3 représentant le sujet est définie par l'espace situé au-delà du cône d'ouverture $\alpha$1.

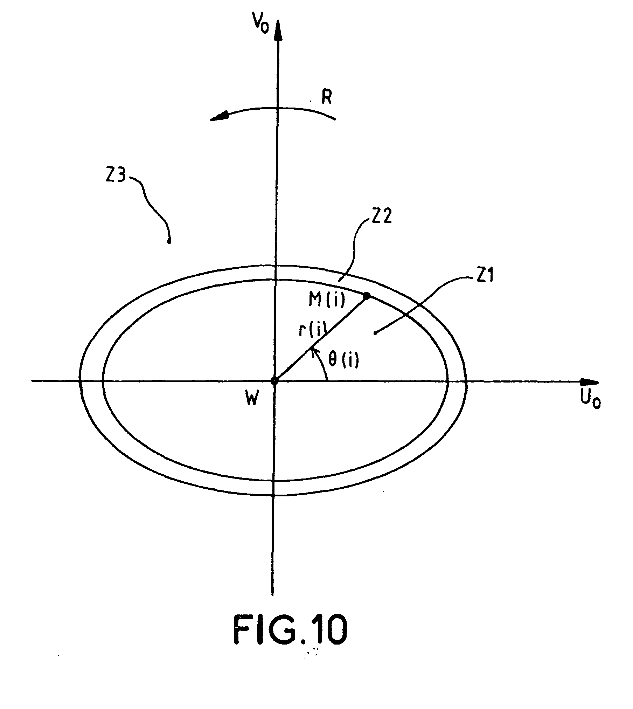

La figure 10 représente la vue en coupe du volume du premier fond coloré selon un plan (Uo, Vo) de section droite du cône.

Cette vue en coupe présente une section elliptique. Cette section elliptique est susceptible de tourner autour de l'axe W d'un angle R comme cela a été mentionné ci-dessus. Les coordonnées r(i) et θ(i) de chaque pixel M(i) délimitant le fond coloré sont alors reliées par l'équation :

$$k^2 \, r(i)^2 \cos^2 (\theta(i) + R) + r(i)^2 \sin^2 (\theta(i) + R) = \text{constante.}$$

La modulation du paramètre k permet la déformation de l'ellipse. Selon l'invention, la modulation elliptique de la distance chrominance laisse la possibilité de réaliser un cercle dans le cas où k = 1. De façon préférentielle k varie entre 0 et 2. La valeur de R peut varier de 0 à $\pi$. Avantageusement, cette technique de modulation permet d'accroître la sélectivité du volume définissant le fond coloré. A titre d'exemple, la technique de modulation elliptique associée à la rotation R permet une nette amélioration pour reproduire la transparence des verres.

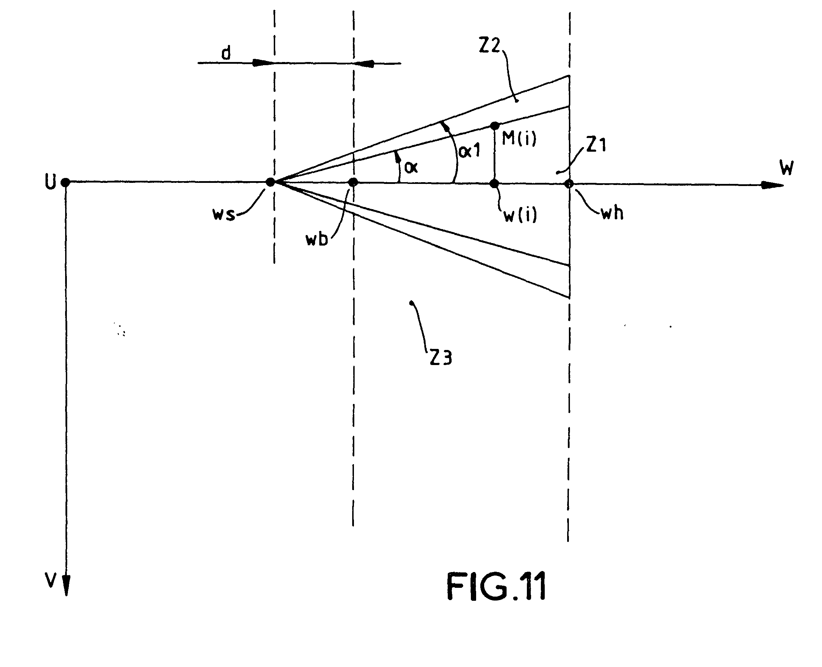

La figure 11 représente la vue en coupe du volume du premier fond coloré selon un plan passant par le grand axe de l'ellipse et le sommet du cône.

Le volume conique est défini de façon que la distance chrominance modulée elliptiquement, notée $r_e(i)$, l'angle d'ouverture $\alpha$ du cône et la coordonnée w(i) du point dont la distance chrominance est $r_e(i)$ soient reliés par l'équation :

$$r_e(i) - \alpha \, w(i) = \text{CLIP}$$

où CLIP est un paramètre dont la variation permet d'engendrer le déplacement de l'ordonnée ws du sommet du cône sur l'axe W. A titre d'exemple, la plage de variation de l'angle $\alpha$ est comprise entre 0 et 45°. L'action conjuguée des paramètres $\alpha$ et CLIP permet avantageusement une modulation de la définition du fond coloré, et partant du sujet à traiter. Pour une valeur de seuillage ws nulle, l'ensemble du volume découpé descend jusqu'au plan des noirs.

La variation de l'abscisse ws permet d'intégrer dans le volume qui définit le fond coloré des points de luminance plus ou moins faible ayant la teinte du fond coloré. Avantageusement, il est alors possible de prendre en compte des fonds colorés non uniformes et dont la luminance varie à l'oeil de façon non négligeable. Comme cela a été mentionné précédemment (cf. figure 9), le cône peut être tronqué d'une distance d dans le cas où wb est différent de ws.

Le paramètre CLIP permet de calculer la clé de chrominance KC. Tout point de l'image dont la distance chrominance est inférieure à la valeur CLIP appartient au fond coloré 1 et possède une clé de chrominance KC nulle.

La zone de transition Z2 est associée au seuillage de la distance chrominance et permet d'effectuer le passage progressif entre le fond et le sujet. La taille de la zone de transition est ajustable par un paramètre de réglage appelé GAIN. A cette fin, le paramètre GAIN permet de calculer la distance séparant les points appartenant au cône d'ouverture $\alpha$1 de ceux appartenant au cône d'ouverture $\alpha$. Tout point de l'image situé en zone Z3, au-delà de la zone de transition Z2, appartient au sujet et a une valeur de clé de chrominance KC égale à 1.

Tous les points d'abscisse w(i) inférieure à wb ont une clé de luminance KL égale à 1. Tous les points d'abscisse w(i) supérieure à wh ont une clé de luminance KL égale à 0. Tous les points d'abscisse w(i) situés entre wb et wh sont dans la zone de transition en luminance.

La génération de la clé de découpe KD du premier fond coloré est réalisée grâce à la combinaison de la clé de chrominance KC et de la clé de luminance KL. Ainsi, pour chacun des points de l'image, le calcul du maximum des deux clés permet-il la construction du volume définissant le fond coloré ; il vient :

$$KD = \text{MAX} [KC, KL].$$

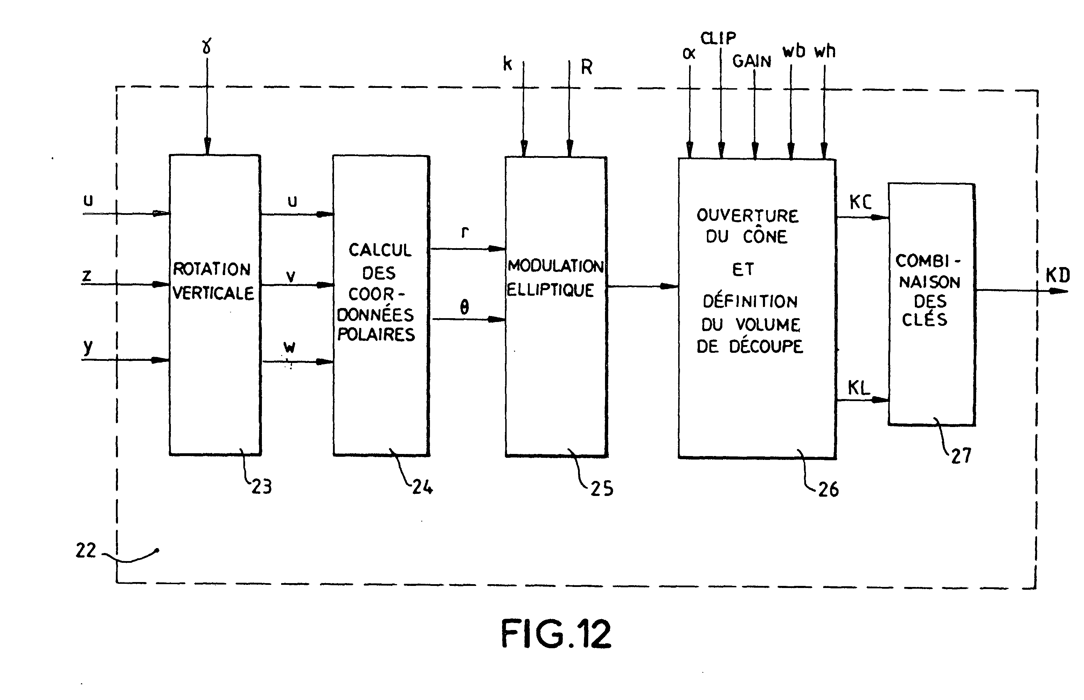

La figure 12 représente le schéma de principe de l'algorithme du calcul 22 de la clé de découpe. Les composantes u, z, y de chaque pixel M(i) sont transformées en composantes u, v, w par la rotation verticale 23 d'angle y définie précédemment.

Dans un premier temps, le microprocesseur charge les informations sin(γ) et cos(γ) pendant la suppression de trame alors qu'un multiplicateur effectue le calcul des produits z x cos(γ), z x sin(γ), y x cos(γ) et y x sin(γ) pendant la trame active. Les informations z, y circulent à la fréquence de 13,5 MHz. Les informations cos(γ), sin(γ) circulent à la fréquence de 27 MHz. Il s'ensuit qu'en sortie du multiplicateur, les informations sont multiplexées à la fréquence de 27 MHz.

Dans un deuxième temps, les informations multiplexées à la fréquence de 27 MHz sont démultiplexées et matricées pour obtenir les signaux w et v à la fréquence de 13,5 MHz.

Durant l'opération de rotation verticale 23, le signal w est retardé de façon à compenser le temps de traitement nécessaire à l'opération 24 de calcul des coordonnées r, θ qui suit l'opération 23 de rotation verticale.

Les coordonnées r et θ associées à chaque pixel sont données par les formules :

$$r = \sqrt{u^2 + v^2}$$

$$\theta = (\vec{U}, \vec{O}P(M)).$$

Les coordonnées r et θ sont récupérées en sortie de l'opérateur 24 afin de réaliser la modulation elliptique 25.

La modulation elliptique 25 est préférentiellement réalisée par le calcul d'un facteur modulant A. Le facteur A est calculé pour chaque pixel, pendant la durée de suppression de trame, à l'aide de deux paramètres de réglage k et R tels que ceux mentionnés lors de la description de la figure 10; il vient :

$$A = \sqrt{k^2 \cos^2 (\theta + R) + \sin^2 (\theta + R)}.$$

Le facteur k permet la déformation elliptique de la distance de chrominance r et l'angle R permet la rotation de la section elliptique du cône de 0 à π.

La distance de chrominance modulée elliptiquement s'écrit alors

$$r_e = r(A)^{1/2}.$$

Le calcul de A s'effectue, par exemple, à l'aide de mémoires EPROMs câblées à cette fin. La dynamique de la multiplication de r par $(A)^{1/2}$ s'effectue sur N bits, par exemple 16 bits, à la fréquence d'échantillonnage des composantes de luminance, soit 13,5 MHz.

La modulation elliptique 25 est suivie d'une opération 26 permettant l'ouverture du cône et la définition du volume de découpe à l'aide des paramètres α, CLIP, GAIN, wb et wh.

L'angle d'ouverture conique α ainsi que la valeur CLIP de seuil de distance chrominance sont appliqués aux valeurs $r_e$ et w de chaque pixel selon la loi énoncée précédemment, soit :

$$re - \alpha\ w = CLIP.$$

Le paramètre GAIN permet de définir la taille de la zone de transition entre le premier fond coloré et le sujet comme cela a été mentionné auparavant.

De même, les paramètres wb et wh, respectivement seuil de luminance bas et seuil de luminance haut, permettent une délimitation du volume du premier fond coloré selon l'axe W.

Ainsi, un avantage de cette approche volumique est-il le caractère facilement adaptatif du volume définissant le premier fond coloré.

La définition du volume de découpe permet la génération de la clé de chrominance KC et de la clé de luminance KL telles que mentionnées ci-dessus.

Les clés KC et KL issues de l'opération 26 de définition du volume de découpe sont alors combinées par une opération 27 de combinaison de façon à obtenir la clé KD permettant la découpe du volume définissant le premier fond coloré. Comme cela a été mentionné précédemment, il vient :

$$KD = MAX\ [KC,\ KL].$$

Les pixels pour lesquels KD = 1 appartiennent au sujet et ceux pour lesquels KD = 0 appartiennent au premier fond coloré. Pour les pixels de la zone de transition, KD est compris entre 0 et 1.

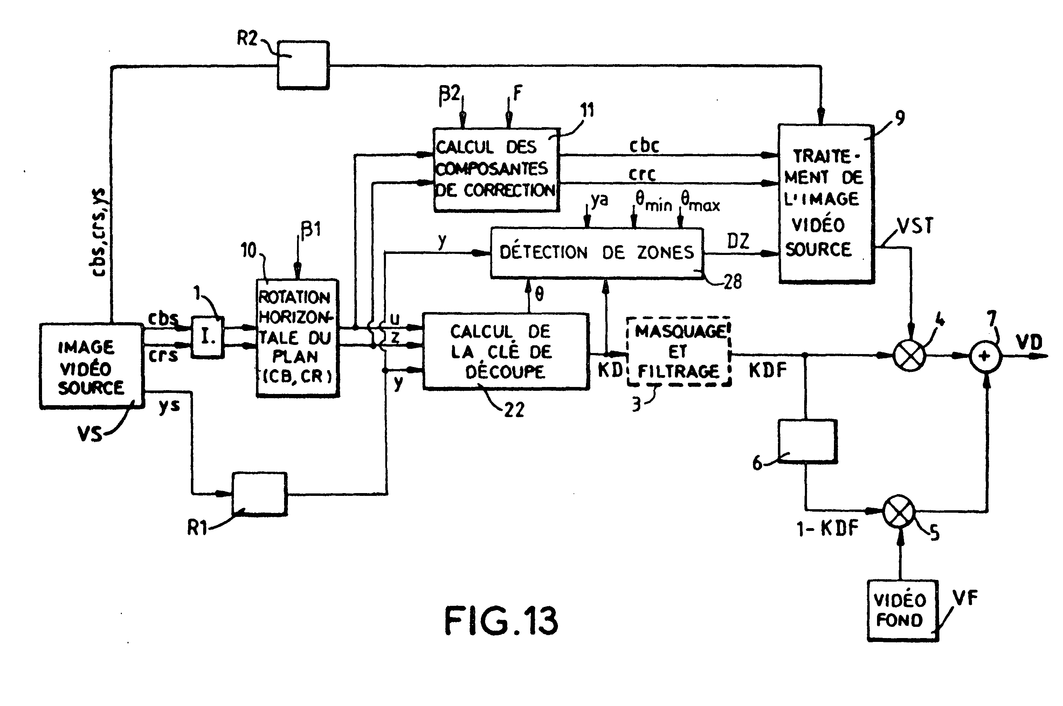

La figure 13 représente un perfectionnement du schéma de principe de la figure 12. Ce perfectionnement concerne la détection de l'ombre portée par le sujet sur le premier fond coloré.

L'ombre portée se caractérise par une information de luminance inférieure au niveau moyen de luminance du premier fond coloré et de même teinte que celle du premier fond coloré.

Selon ce perfectionnement, l'ombre portée peut être supprimée ou restituée par atténuation de luminance du nouveau fond d'accueil. Pour l'information qui permet la découpe, l'ombre ne fait pas partie du premier fond coloré. Il faut cependant la distinguer du sujet. A cette fin, tout pixel situé autour de la teinte du premier fond coloré, dont la valeur de luminance est inférieure à un certain seuil et qui appartient à la zone de transition Z2 située entre le fond coloré 1 et le sujet 3 est considéré comme un pixel d'ombre.

Avantageusement, l'orientation et la forme conique du volume définissant le premier fond coloré permettent de faire entrer les pixels d'ombre dans la zone de transition Z2 séparant le sujet du premier fond coloré.

Selon le perfectionnement de la figure 13, l'opérateur 28 de détection de zones comprend des opérations permettant la détection de l'ombre portée par le sujet sur le premier fond coloré. La composante luminance y est comparée à une valeur de seuil de luminance ya et la coordonnée angulaire $\theta$ issue de l'opérateur 24 décrit à la figure 12 est comparée à deux valeurs $\theta$min et $\theta$max dont la différence $\theta$max - $\theta$min définit l'ouverture angulaire dans laquelle doit se situer l'angle $\theta$ pour que la teinte du pixel associé à $\theta$ soit assimilée à la teinte du premier fond coloré. Tout pixel dont la valeur de $\theta$ est comprise entre $\theta$min et $\theta$ max et dont la valeur de luminance y est inférieure à ya est considéré comme un pixel d'ombre.

Comme cela a été mentionné précédemment, les pixels d'ombre sont situés dans la zone de transition Z2 séparant le sujet du premier fond coloré. Ainsi, la clé KD est-elle appliquée à l'opérateur 28 de détection de zones de façon à apporter l'information permettant de localiser les pixels de la zone de transition Z2. Le signal DZ issu de l'opérateur 28 de détection de zones permet alors de donner une information de détection des pixels d'ombre selon la méthode mentionnée ci-dessus.

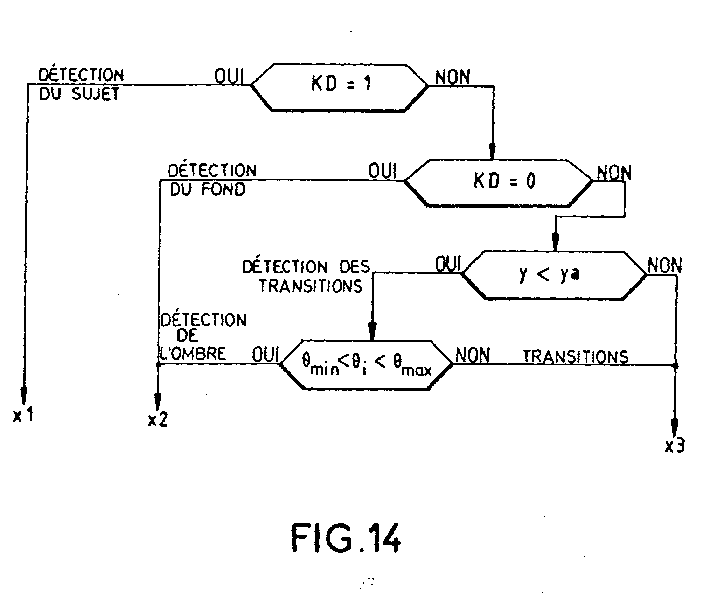

Avantageusement, comme cela apparaît en figure 14, le signal DZ peut fournir non seulement une information pour localiser les pixels d'ombre mais aussi différentes informations permettant de localiser les pixels représentant l'image vidéo source selon leur position dans l'espace des couleurs.

Sur la figure 14 sont représentées les différentes étapes de l'opération 28 de détection de zones sous forme d'organigramme dans le cas où le signal DZ fournit toutes les informations permettant de localiser les pixels représentant l'image vidéo source selon leur position dans l'espace des couleurs. L'invention concerne cependant aussi les cas où DZ donne tout ou partie de ces informations.

Si la clé KD a pour valeur 1, l'information DZ prend une valeur x1 traduisant la détection du sujet.

Si la clé KD a pour valeur 0, l'information DZ prend une valeur x2 traduisant la détection du fond.

Si la clé KD a une valeur comprise entre 0 et 1, la valeur de luminance y est comparée à la valeur de seuil ya et :

- Si y n'est pas inférieur à ya, l'information DZ prend une valeur x3 traduisant la détection de la zone de transition entre fond et sujet.
- Si y est inférieur à ya et si $\theta$ est compris entre $\theta$min et $\theta$max, l'information DZ prend une valeur traduisant la détection de l'ombre. Préférentiellement, cette valeur est égale à x2 de façon que les pixels d'ombre soient traités comme les pixels du fond.
- Si y est inférieur à ya et si $\theta$ n'est pas compris dans l'intervalle $\theta$min, $\theta$max, l'information DZ prend une valeur traduisant la détection de la zone de transition entre fond et sujet.

**Revendications**

1. Procédé d'incrustation sur un nouveau fond coloré (VF) d'un sujet issu de la découpe d'une image vidéo source (VS) constituée du sujet évoluant devant un premier fond coloré, ledit procédé comprenant une étape (2) de calcul d'une clé KD de découpe permettant de séparer l'espace des couleurs (CB, CR, Y) représentant ladite image vidéo source (VS) en trois zones, une première zone (Z1) définissant un volume représentant le premier fond coloré, une deuxième zone (Z3) définissant un volume représentant le sujet et une troisième zone (Z2) représentant une zone de transition (Z2) entre le premier fond coloré et le sujet, un signal DZ indiquant l'appartenance ou la non appartenance à la zone de transition (Z2), et une étape de mélange telle que l'image vidéo VD représentant le sujet évoluant devant le nouveau fond coloré soit donné par la formule :

$$VD = KD \times \text{vidéo sujet} + (1 - KD) \times \text{vidéo fond,}$$

où vidéo sujet et vidéo fond représentent respectivement une image vidéo contenant le sujet et l'image vidéo du nouveau fond coloré, **caractérisé en ce que** l'image vidéo contenant le sujet (vidéo sujet) est issue d'une étape (9) de traitement de l'image vidéo source, ladite étape de traitement effectuant la décolorisation de la zone de transition par l'addition, à chaque pixel de la zone de transition, d'une couleur complémentaire à la couleur dudit pixel de façon à rendre sensiblement achrome ledit pixel .

2. Procédé selon la revendication 1, **caractérisé en ce que** la décolorisation est telle qu'une composante chrominance de différence de couleur bleue de correction (cbc) et une composante chrominance de différence de couleur rouge de correction (crc) sont respectivement appliquées à chaque composante chrominance de différence de couleur bleue et à chaque composante chrominance de différence de couleur rouge de chaque pixel de la zone de transition.

3. Procédé selon la revendication 2, **caractérisé en ce que** le calcul desdites composantes chrominance de correction (cbc, crc) est effectué à l'aide du calcul d'une clé KA de décolorisation.

4. Procédé selon la revendication 3, **caractérisé en ce que** la valeur de la composante chrominance de couleur bleue de correction et la valeur de la composante chrominance de couleur rouge de correction sont respectivement issues du produit de la quantité $\cos(\beta 2)$ par la clé KA de décolorisation et du produit de la quantité $\sin(\beta 2)$ par la clé KA de décolorisation, $\beta 2$ étant égal à $\beta 1 + \pi$ où $\beta 1$ est l'angle permettant de transformer l'axe CR de chrominance de couleur rouge de l'espace des couleurs (CB, CR, Y) en l'axe Z pointant dans la direction de la teinte d'un pixel du premier fond coloré.

5. Procédé selon l'une quelconque des revendications 3 ou 4, **caractérisé en ce que** le calcul de la clé de décolorisation est tel que :

$$KA = z - F \; |u|,$$

où $z$ et $u$ sont les coordonnées de chaque pixel selon les axes respectifs Z et U, l'axe U étant l'axe issu de la rotation d'angle $\beta 1$ de l'axe CB de chrominance de différence de couleur bleue de l'espace des couleurs (CB, CR, Y), $|u|$ désignant la valeur absolue de la coordonnée $u$, F étant un paramétre de réglage permettant de moduler la valeur de la clé KA.

6. Procédé selon l'une quelconque des revendications 1 à 5, **caractérisé en ce que** l'étape de traitement (9) comprend une étape de mise au noir des pixels appartenant au premier fond coloré.

7. Procédé selon l'une quelconque des revendications 1 à 5, **caractérisé en ce que** l'étape (2) de calcul de la clé de découpe KD comprend différentes étapes de calcul (23, 24, 25, 26, 27) permettant de définir le volume représentant le premier fond coloré sous forme de cône d'angle d'ouverture $\alpha$ dont l'axe de symétrie (W) passe par le point achrome et de luminance nulle de l'espace des couleurs (CB, CR, Y) et un point représentant la couleur du premier fond coloré.

8. Procédé selon la revendication 7, **caractérisé en ce que** les coordonnées polaires $r(i)$ et $\theta(i)$ des différents pixels (Mi) qui définissent une section droite du cône dans un plan Uo, Vo) tel que le trièdre (Uo, Vo, W) soit un trièdre direct, suivent l'équation :

$$k^2 \, r(i)^2 \, \cos^2 (\theta(i) + R) + r(i)^2 \, \sin^2(\theta(i) + R) = \text{constante},$$

où $\theta(i)$ est l'angle polaire définissant le point M(i) dans le plan (Uo, Vo), $k$ et R étant respectivement un facteur de modulation elliptique de la coordonnée $r(i)$ et un angle de rotation de la section droite du cône.

9. Procédé selon la revendication 8, **caractérisé en ce que** l'ouverture $\alpha$ du cône est reliée à un paramètre de réglage CLIP de façon que :

$$r_e(i) - \alpha \, w(i) = \text{CLIP}$$

**10**

où

$$r_e(i) = r(i) \, (A)^{1/2}$$

avec

$$A = \sqrt{k^2 \cos^2 (\theta(i) + R) + \sin^2 (\theta(i) + R))}$$

et où w(i) est la coordonnée sur l'axe de symétrie (W) dudit cône du plan (Uo, Vo), la face opposée au sommet du cône étant définie par une coordonnée wh sur l'axe de symétrie (W) du cône.

**10.** Procédé selon la revendication 8 ou 9, **caractérisé en ce que** le facteur de modulation elliptique k est tel que 0 $\leq$ k $\leq$ 2, et **en ce que** l'angle R peut varier de 0 à $\pi$.

**11.** Procédé selon l'une quelconque des revendications 8 à 10, **caractérisé en ce que** la zone de transition (Z2) entre le premier fond coloré et le sujet est définie par une zone d'espace comprise entre la surface du cône d'ouverture $\alpha$ définissant le premier fond coloré et un cône d'ouverture $\alpha$1 supérieure $\alpha$, de même axe de symétrie et de même sommet que le cône définissant le premier fond coloré, et dont la face opposée au sommet est dans le même plan que la face opposée au sommet du cône définissant le premier fond coloré.

**12.** Procédé selon la revendication 11, **caractérisé en ce que** la taille de la zone de transition est ajustable par un paramètre de réglage (GAIN).

**13.** Procédé selon l'une quelconque des revendications 7 à 12, **caractérisé en ce que** le cône définissant le premier fond coloré peut être tronqué d'une distance d séparant la coordonnée ws donnant la position du sommet du cône sur l'axe de symétrie W d'une coordonnée wb définissant, sur ledit axe de symétrie, un seuil de luminance bas wb ayant une valeur comprise entre ws et wh.

**14.** Procédé selon l'une des revendications 7 à 13, **caractérisé en ce que** la clé de découpe KD est issue d'une opération de combinaison d'une clé de chrominance KC et d'une clé de luminance KL de façon que :

$$KD = MAX [KC, KL]$$

la clé de luminance KL ayant pour valeur 1 pour tout pixel dont la coordonnée w(i) sur l'axe de symétrie du cône d'ouverture $\alpha$ est inférieure à wb et pour valeur 0 pour tout pixel dont la coordonnée w(i) sur l'axe de symétrie du cône d'ouverture $\alpha$ est supérieure à wh, et la clé de chrominance KC ayant pour valeur 0 pour tout pixel appartenant au cône d'ouverture $\alpha$ et pour valeur 1 pour tout pixel situé au-delà du cône d'ouverture $\alpha$1.

**15.** Procédé selon l'une quelconque des revendications 7 à 14, **caractérisé en ce que** le niveau achrome des différentes composantes de chrominance et le niveau zéro de la composante de luminance qui constituent l'origine du repére de l'espace des couleurs sont convertis en zéros arithmétiques.

**16.** Procédé selon l'une quelconque des revendications 1 à 15, **caractérisé en ce que** le signal DZ issu de l'étape (12) de détection de zones permet de localiser des pixels représentant l'ombre du sujet portée sur le premier fond coloré.

**17.** Procédé selon la revendication 16, **caractérisé en ce que** l'étape (12) de détection de zones permettant de délivrer le signal DZ comprend la séquence suivante :

- si la clé de découpe KD est comprise entre 0 et 1, la valeur de luminance y de chaque pixel M(i) est comparée à une valeur de seuil ya et :
- si y est supérieur à ya, l'information DZ prend une valeur traduisant la détection de la zone de transition entre fond et sujet;
- si y est inférieur à ya et si l'angle $\theta(i)$ est compris entre deux valeurs $\theta$min et $\theta$max dont la différence $\theta$max - $\theta$min définit l'ouverture angulaire dans laquelle doit se situer l'angle $\theta(i)$ pour que la teinte du pixel associé à θ(i) soit assimilée à la teinte du premier fond coloré, l'information DZ prend une valeur traduisant la détection de l'ombre;

- si y est inférieur à ya et si l'angle θ(i) n'est pas compris entre lesdites valeurs θmin et θmax, l'information DZ prend une valeur traduisant la détection de la zone de transition (Z2) entre fond et sujet.

**18.** Procédé selon l'une quelconque des revendications précédentes, **caractérisé en ce que** la clé de découpe KD est issue d'une opération (3) de masquage et de filtrage.

**19.** Appareil électronique permettant d'incruster sur un nouveau fond coloré (VF) un sujet issu de la découpe d'une image vidéo source (VS) constituée du sujet évoluant devant un premier fond coloré, ledit appareil comprenant des moyens pour calculer une clé KD de découpe dudit sujet, ladite clé KD permettant de séparer l'espace des couleurs en trois zones, une première zone (Z1) définissant un volume représentant le premier fond coloré, une deuxième zone (Z3) définissant un volume représentant le sujet et une troisième zone (Z2) définissant une zone de transition entre le premier fond coloré et le sujet, et des moyens pour que l'image vidéo VD représentant le sujet évoluant devant le nouveau fond coloré soit donné par la formule :

$$VD = KD \times \text{vidéo sujet} + (1 - KD) \times \text{vidéo fond},$$

où vidéo sujet et vidéo fond représentent respectivement une image vidéo contenant le sujet et l'image vidéo du nouveau fond coloré, **caractérisé en ce qu'**il comprend des moyens (9) permettant de traiter ladite image vidéo source (VS), lesdits moyens (9) permettant de traiter l'image vidéo source comprenant :

- des moyens de décolorisation de la zone de transition, lesdits moyens de décolorisation effectuant la décolorisation par l'addition, à chaque pixel de la zone de transition, d'une couleur complémetaire à la couleur dudit pixel de façon à rendre sensiblement achrome ledit pixel, et
- des moyens de détection (12) de zones permettant de localiser les différents pixels de la vidéo sujet selon leur position dans l'espace des couleurs, les moyens de détection (12) de zones étant commandés par la clé KD de découpe et générant un signal (DZ) permettant de commander les moyens de décolorisation de la zone de transition.

**20.** Appareil électronique selon la revendication 19, **caractérisé en ce qu'**il comporte des moyens (10, 11) permettant de générer une composante chrominance de différence de couleur bleue de correction (cbc) et une composante chrominance de différence de couleur rouge de correction (crc) et **en ce que** les moyens de décolorisation comprennent des moyens (14, 15, 16, 17) permettant de rendre sensiblement achrome chaque pixel de la zone de transition sous l'action desdites composantes chrominance de différence de couleur bleue et rouge.

**21.** Appareil électronique selon la revendication 20, **caractérisé en ce que** les moyens (10, 11) permettant de générer une composante chrominance de différence de couleur bleue de correction (cbc) et une composante, chrominance de différence de couleur rouge de correction (crc), comprennent des moyens (OK) de calcul d'une clé de décolorisation KA.

**22.** Appareil électronique selon la revendication 21, **caractérisé en ce que** les moyens (OK) de calcul d'une clé KA de décolorisation sont tels que :

$$KA = z - F |u|,$$

où z et u sont les coordonnées de chaque pixel selon les axes respectifs Z et U, les axes Z et U étant respectivement issus d'une rotation d'angle β1 des axes CR, CB de l'espace des couleurs (CB, CR, Y), l'angle β1 étant tel que l'axe Z pointe dans la direction de la teinte d'un pixel du premier fond coloré.

**23.** Appareil électronique selon l'une quelconque des revendications 19 à 22, **caractérisé en ce que** les moyens (9) permettant de traiter l'image vidéo source (VS) comprennent des moyens (19, 20, 21) permettant de mettre au noir les pixels appartenant au premier fond coloré.

**24.** Appareil électronique selon l'une quelconque des revendications 19 à 23, **caractérisé en ce que** les moyens (2) pour calculer la clé KD de découpe comprennent des moyens (23) pour calculer les coordonnées de chaque pixel de l'espace des couleurs dans, un repère (U, V, W), le repère (U, V, W) étant un trièdre direct dont le centre est le point achrome de luminance nulle et dont l'axe W pointe vers un point de couleur du premier fond coloré, et des moyens (24, 25, 26, 27) pour définir le volume représentant le premier fond coloré sous forme de cône d'angle d'ouverture α ayant pour axe de symétrie l'axe W.

25. Appareil électronique selon la revendication 24, **caractérisé en ce qu'**ii comprend des moyens (25) pour moduler elliptiquement la section droite du cône d'angle d'ouverture α.

26. Appareil électronique selon l'une quelconque des revendications 24 ou 25, **caractérisé en ce qu'**il comprend des moyens (GAIN) pour que la zone de transition entre le premier fond coloré et le sujet soit définie par une zone d'espace comprise entre la surface du cône d'ouverture α définissant le premier fond coloré et un cône d'ouverture α1 supérieure à α, de même axe de symétrie et de même sommet que le cône définissant le premier fond coloré, et dont la face opposée au sommet est dans le même plan que la face opposée au sommet du cône définissant le premier fond coloré.

27. Appareil électronique selon l'une quelconque des revendications 24 à 26, **caractérisé en ce qu'**il comprend des moyens pour tronquer d'une distance d le cône définissant le premier fond coloré, ladite distance d séparant la coordonnée ws donnant la position du sommet du cône sur l'axe de symétrie W d'une coordonnée wb définissant, sur ledit axe de symétrie, un seuil de luminance bas wb ayant une valeur comprise entre ws et wh, wh étant l'abscisse du plan définissant la face opposée au sommet du cône.

28. Appareil électronique selon l'une des revendications 19 à 27, **caractérisé en ce que** les moyens (12) de détection de zones comprennent des moyens permettant de localiser des pixels représentant l'ombre du sujet portée sur le premier fond coloré.

29. Appareil électronique selon la revendication 28, **caractérisé en ce qu'**il comprend des moyens pour mettre au noir lesdits pixels représentant l'ombre du sujet.

30. Mélangeur vidéo, **caractérisé en ce qu'**il comprend un appareil électronique selon l'une quelconque des revendications 19 à 29.

31. Dispositif autonome de découpe et d'incrustation d'image vidéo, **caractérisé en ce qu'**il comprend un appareil électronique selon l'une quelconque des revendications 19 à 29.

**Patentansprüche**

1. Verfahren zur Überlagerung eines Objektes aus dem Ausschnitt einer Videobildquelle (VS), die aus dem sich vor einem ersten farbigen Hintergrund bewegenden Objekt besteht, auf einem neuen farbigen Hintergrund (VF) mit einem Schritt (2) zur Berechnung eines Ausschneideschlüssels KD, der es ermöglicht, den Vektorraum der Farben (CB, CR, Y), der die Videobildquelle (VS) darstellt, in drei Bereiche zu trennen, einen ersten Bereich (Z1), der ein den ersten farbigen Hintergrund darstellendes Volumen definiert, einen zweiten Bereich (Z2), der ein das Objekt darstellendes Volumen definiert, und einen dritten Bereich (Z3), der einen Übergangsbereich (Z2) zwischen dem ersten farbigen Hintergrund und dem Objekt darstellt, wobei ein Signal DZ die Zugehörigkeit oder die Nicht-Zugehörigkeit zu dem Übergangsbereich (Z2) anzeigt, und ein Schritt zur Mischung des Videobildes VD, das das sich vor dem neuen farbigen Hintergrund bewegende Objekt anzeigt, durch folgende Gleichung gegeben sind:

$$VD = KD \times \text{Videoobjekt} + (1 - KD) \times \text{Videohintergrund},$$

wobei Videoobjekt und Videohintergrund jeweils ein Videobild darstellen, das das Objekt und das Videobild des neuen farbigen Hintergrunds enthält,
**dadurch gekennzeichnet, daß**
das das Objekt (Videoobjekt) enthaltende Videobild sich aus einem Schritt (9) zur Verarbeitung der Videobildquelle ergibt, daß der Verarbeitungsschritt die Entfärbung des Übergangsbereichs durch Hinzufügung einer zu der Farbe des Pixels komplementären Farbe zu jedem Pixel des Übergangsbereichs bewirkt, so daß das Pixel im wesentlichen farblos oder unbunt wird.

2. Verfahren nach Anspruch 1, **dadurch gekennzeichnet, daß** die Entfärbung derart ausgebildet ist, daß eine Korrektur-Chrominanzdifferenzkomponente (cbc) der Farbe Blau und eine Korrektur-Chrominanzdifferenzkomponente (crc) der Farbe Rot jeweils jeder Chrominanzdifferenzkomponente der Farbe Blau und jeder Chrominanzdifferenzkomponente der Farbe Rot jedes Pixels des Übergangsbereichs zugeführt werden.

3. Verfahren nach Anspruch 2, **dadurch gekennzeichnet, daß** die Berechnung der Korrektur-Chrominanzkomponenten (cbc, crc) mittels der Berechnung eines Entfärbungsschlüssels KA erfolgt.

4. Verfahren nach Anspruch 3, **dadurch gekennzeichnet, daß** der Wert der Korrektur-Chrominanzkomponente der Farbe Blau und der Wert der Korrektur-Chrominanzkomponente der Farbe Rot jeweils aus dem Produkt der Menge $\cos(\beta2)$ durch den Entfärbungsschlüssel KA und dem Produkt der Menge $\sin(\beta2)$ durch den Entfärbungsschlüssel KA entstehen, wobei $\beta2$ gleich $\beta1 + \pi$ ist und $\beta1$ der Winkel ist, der es ermöglicht, die Achse CR der Chrominanz der Farbe Rot des Vektorraums der Farben (CB, CR, Y) in die Achse Z umzusetzen, die in die Richtung des Farbtons eines Pixels des ersten farbigen Hintergrunds zeigt.

5. Verfahren nach einem der Ansprüche 3 oder 4, **dadurch gekennzeichnet, daß** die Berechnung des Entfärbungsschlüssels derart ist, daß:

$$KA = z - F\,|u|,$$

wobei z und u die Koordinaten jedes Pixels entlang den Achsen Z beziehungsweise U sind, die Achse U die Achse aus der Drehung um den Winkel $\beta1$ der Achse CB der Chrominanz der Differenz der blauen Farbe des Vektorraums der Farben ( CB, CR, Y) ist, $|u|$ den Absolutwert der Koordinaten u bezeichnet, und F ein Einstellparameter ist, der die Modulation oder Änderung des Wertes des Schlüssels KA ermöglicht.

6. Verfahren nach einem der Ansprüche 1 bis 5, **dadurch gekennzeichnet, daß** der Verarbeitungsschritt (9) einen Schritt enthält, der die zu dem ersten farbigen Hintergrund gehörenden Pixel auf Schwarz setzt.

7. Verfahren nach einem der Ansprüche 1 bis 5, **dadurch gekennzeichnet, daß** der Schritt (2) zur Berechnung des Ausschneideschlüssels KD verschiedene Berechnungsschritte (23, 24, 25, 26, 27) enthält', die es ermöglichen, das Volumen zu bestimmen, das den ersten farbigen Hintergrund in der Form eines Kegels mit einem Öffnungswinkel $\alpha$ darstellt, dessen Symmetrieachse (W) durch den farblosen Punkt und die Luminanz null des Vektorraums der Farben (CB, CR, Y) und einen Punkt, der die Farbe des ersten farbigen Hintergrunds darstellt, verläuft.

8. Verfahren nach Anspruch 7, **dadurch gekennzeichnet, daß** die Polarkoordinaten r(i) und $\theta(i)$ der verschiedenen Pixel (Mi), die einen Querschnitt des Kegels in einer Ebene (Uo, Vo) bilden, sowie das Dreieck (Uo, Vo, W) ein rechtsgängiges Dreieck ist, gemäß der Gleichung:

$$k^2 r(i)^2 \cos^2(\theta(i) + R) + r(i)^2 \sin^2(\theta(i) + R) = \text{konstant},$$

wobei $\theta(i)$ der Polarwinkel, der den Punkt M(i) in der Ebene (Uo, Vo) definiert, k und R jeweils ein Faktor der elliptischen Modulation der Koordinaten r(i) beziehungsweise ein Drehwinkel des Kegelquerschnitts sind.

9. Verfahren nach Anspruch 8, **dadurch gekennzeichnet, daß** die öffnung $\alpha$ des Kegels mit einem Einstellparameter CLIP derart verknüpft ist, daß:

$$r_e(i) - \alpha w(i) = \text{CLIP}$$

$$\text{wo } r_e(i) = r(i)(A)^{1/2} \text{ mit}$$

$$A = \sqrt{k^2 \cos^2(\theta(i) + R) + \sin^2(\theta(i) + R))}$$

und wobei w(i) die Koordinate auf der Symmetrieachse (W) des Kegels der Ebene (Uo, Vo) ist und die der Kegelspitze gegenüberliegende Fläche durch eine Koordinate wh auf der Symmetrieachse (W) des Kegels bestimmt ist.

**10.** Verfahren nach Anspruch 8 oder 9, **dadurch gekennzeichnet, daß** der Faktor der elliptischen Modulation k derart ist, daß 0 = k = 2, und daß der Winkel R sich von 0 bis $\pi$ ändern kann.

**11.** Verfahren nach einem der Ansprüche 8 bis 10, **dadurch gekennzeichnet, daß** der Übergangsbereich (Z2) zwischen dem ersten farbigen Hintergrund und dem Objekt durch einen Abstandsbereich zwischen der Oberfläche der den ersten farbigen Hintergrund bestimmenden Kegelöffnung $\alpha$ und einer Kegelöffnung $\alpha 1$ größer als $\alpha$ ist, mit derselben Symmetrieachse und derselben Spitze wie der den ersten farbigen Hintergrund bestimmenden Kegels, und dessen der Spitze gegenüberliegende Fläche in derselben Ebene liegt wie die Fläche, die der Spitze des den ersten farbigen Hintergrund bestimmenden Kegels gegenüberliegt.

**12.** Verfahren nach Anspruch 11, **dadurch gekennzeichnet, daß** die Größe des Übergangsbereichs durch einen Einstellparameter (GAIN) einstellbar ist.

**13.** Verfahren nach einem der Ansprüche 7 bis 12, **dadurch gekennzeichnet, daß** der den ersten farbigen Hintergrund bestimmende Kegel um einen Abstand d abgestumpft sein kann, der die Koordinate ws, die die Lage der Kegelspitze auf der Symmetrieachse W angibt, von einer Koordinaten wb trennt, die auf der Symmetrieachse eine untere Luminanzschwelle wb mit einem Wert zwischen ws und wh bestimmt.

**14.** Verfahren nach einem der Ansprüche 7 bis 13, **dadurch gekennzeichnet, daß** der Ausschneideschlüssel KD aus einem Vorgang zur Kombination eines Chromianazschlüssels KC und eines Luminanzschlüssels KL derart hervorgeht, daß:

$$KD = MAX [KC, KL]$$

der Luminanzschlüssel KL einen Wert 1 für alle Pixel hat, deren Koordinate w(i) auf der Symmetrieachse der Kegelöffnung $\alpha$ kleiner ist als wb, und den Wert null für alle Pixel hat, deren Koordinate w(i) auf der Symmetrieachse der Kegelöffnung $\alpha$ größer ist als wh, und der Chrominanzschlüssel KC einen Wert 0 hat für alle zu der Kegelöffnung $\alpha$ gehörenden Pixel, und einen Wert 1 hat für alle Pixel über die Kegelöffnung $\alpha 1$ hinaus.

**15.** Verfahren nach einem der Ansprüche 7 bis 14, **dadurch gekennzeichnet, daß** der farblose Wert der Chrominanzdifferenzkomponenten und der Wert null der Luminanzkomponente, die den Ursprung des Vektorraums der Farben bilden, in arithmetischen Nullen umgesetzt werden.

**16.** Verfahren nach einem der Ansprüche 1 bis 15, **dadurch gekennzeichnet, daß** das Signal DZ aus dem Schritt (12) der Detektion der Bereiche es ermöglicht, Pixel zu lokalisieren, die den auf den ersten farbigen Hintergrund geworfenen Schatten des Objekts darstellen.

**17.** Verfahren nach Anspruch 16, **dadurch gekennzeichnet, daß** der Schritt (12) der Detektion der Bereiche es ermöglicht, das Signal DZ abzuleiten, das die folgende Folge enthält:

- wenn der Ausschneideschlüssel KD zwischen 0 und 1 liegt, wird der Luminanzwert y jedes Pixels M(i) mit einem Schwellwert ya verglichen, und:
- wenn y größer ist als ya, nimmt die Information DZ einen Wert an, der die Detektion des Übergangsbereichs zwischen dem Hintergrund und dem Objekt anzeigt,
- wenn y kleiner ist als ya und wenn der Winke $\theta(i)$ zwischen zwei Werten $\theta min$ und $\theta max$ liegt, deren Differenz $\theta max - \theta min$ den öffnungswinkel bestimmt, in dem der Winkel $\theta(i)$ liegen muß, für den der Farbton des zu $\theta(i)$ gehörenden Pixels an den Farbton des ersten farbigen Hintergrunds angepaßt ist, die Information DZ einen Wert annimmt, der die Detektion des Schattens anzeigt,
- wenn y kleiner ist als ya und wenn der Winkel $\theta(i)$ nicht zwischen den Werten $\theta min$ und $\theta max$ liegt, nimmt die Information DZ einen Wert an, der die Detektion des Übergangsbereichs (Z2) zwischen dem Hintergrund und dem Objekt anzeigt.

**18.** Verfahren nach einem der vorangehenden Ansprüche, **dadurch gekennzeichnet, daß** der Ausschneideschlüssel KD aus einem Vorgang (3) einer Maskierung und Filterung hervorgeht.

**19.** Elektronische Vorrichtung zur Ermöglichung einer Überlagerung eines Objektes aus dem Ausschnitt einer Videobildquelle (VS), die aus dem sich vor einem ersten farbigen Hintergrund bewegenden Objekt besteht, auf einem neuen farbigen Hintergrund (VF) mit Mitteln zur Berechnung eines Ausschneideschlüssels KD des Objekts, der es ermöglicht, den Vektorraum der Farben in drei Bereiche zu trennen, einen ersten Bereich (Z1), der ein dem ersten farbigen Hintergrund darstellendes Volumen definiert, einen zweiten Bereich (Z2), der ein das Objekt darstellendes Volumen definiert, und einen dritten Bereich (Z3), der einen Übergangsbereich (Z2) zwischen dem ersten farbigen Hintergrund und dem Objekt darstellt, und Mitteln, damit das Videobild VD, das das sich vor dem neuen farbigen Hintergrund bewegende Objekt anzeigt, durch folgende Gleichung gegeben ist:

$$VD = KD \times Videoobjekt + (1 - KD) \times Videohintergrund,$$

wobei Videoobjekt und Videohintergrund jeweils ein Videobild darstellen, das das Objekt und das Videobild des neuen farbigen Hintergrunds enthält,

**gekennzeichnet durch**
Mittel (9), die es ermöglichen, die Videobildquelle (VS) zu verarbeiten, und daß die Mittel (9), die die Verarbeitung der Videobildquelle ermöglichen, folgendes enthalten:

- Mittel zur Entfärbung des Übergangsbereichs, wobei diese Mittel zur Entfärbung die Entfärbung **durch** Addition einer zu der Farbe des Pixels komplementären Farbe zu jedem Pixel des Übergangsbereichs bewirken, derart, daß das Pixel im wesentlichen farblos wird, und
- Mittel (12) zur Detektion der Bereiche, die es ermöglichen, die verschiedenen Pixel des Videoobjekts bezüglich ihrer Lage in dem Vektorraum der Farben zu lokalisieren, wobei die Mittel (12) zur Detektion der Bereiche **durch** den Ausschneideschlüssel KD gesteuert werden und ein Signal (DZ) erzeugen, das die Steuerung der Entfärbungsmittel des Übergangsbereichs ermöglicht.

**20.** Elektronische Vorrichtung nach Anspruch 19, **gekennzeichnet durch** Mittel (10, 11), die es ermöglichen, eine Korrektur-Chrominanzdifferenzkomponente (cbc) der Farbe Blau und eine Korrektur-Chrominanzdifferenzkomponente (crc) der Farbe Rot zu erzeugen, und daß die Mittel zur Entfärbung Mittel (14, 15, 16, 17) enthalten, die es ermöglichen, jedes Pixel des Übergangsbereichs **durch** die Wirkung der Chrominanzdifferenzkomponenten der Farbe Blau und Rot im wesentlichen farblos auszubilden.

**21.** Elektronische Vorrichtung nach Anspruch 20, **dadurch gekennzeichnet, daß** die Mittel (10, 11), die die Erzeugung einer Korrektur-Chrominanzdifferenzkomponente (cbc) der Farbe Blau und einer Korrektur-Chrominanzdifferenzkomponente (crc) der Farbe Rot ermöglichen, Mittel (OK) zur Berechnung eines Entfärbungsschlüssels KA enthalten.

**22.** Elektronische Vorrichtung nach Anspruch 21, **dadurch gekennzeichnet, daß** die Mittel (OK) zur Berechnung eines Entfärbungsschlüssels KA derart sind, daß:

$$KA = z - F |u|,$$

wobei z und u die Koordinaten jedes Pixels entlang den Achsen Z beziehungsweise U sind, die Achsen Z und U sich jeweils aus einer Drehung um den Winkel $\beta 1$ der Achsen CR, CB des Vektorraums der Farben (CB, CR, Y) hervorgehen, der Winkel $\beta 1$ derart ist, daß die Achse Z in die Richtung des Farbtons eines Pixels des ersten farbigen Hintergrunds zeigt.

**23.** Elektronische Vorrichtung nach einem der Ansprüche 19 bis 22, **dadurch gekennzeichnet, daß** die die Verarbeitung der Videobildquelle (VS) ermöglichenden Mittel (9) Mittel (19, 20, 21) enthalten, die es ermöglichen, die zu dem ersten farbigen Hintergrund gehörenden Pixel auf Schwarz zu setzen.

**24.** Elektronische Vorrichtung nach einem der Ansprüche 19 bis 23, **dadurch gekennzeichnet, daß** die Mittel (2) zur Berechnung des Ausschneideschlüssels KD Mittel (23) zur Berechnung der Koordinaten jedes Pixels des Vektorraums der Farben in einem Referenzbild (U, V, W) enthalten, wobei das Referenzbild (U, V, W) ein rechtsgängiges Dreieck ist, dessen Mittelpunkt der farblose Punkt der Luminanz null ist und dessen Achse W zu einem Punkt der Farbe des ersten farbigen Hintergrunds zeigt, und Mittel (24, 25, 26, 27) zur Bestimmung des Volumens, das den ersten farbigen Hintergrund darstellt, in der Form des Kegelöffnungswinkels $\alpha$, der als Achse die Symmetrieachse W aufweist.

**25.** Elektronische Vorrichtung nach Anspruch 24, **dadurch gekennzeichnet, daß** sie Mittel (25) zur elliptischen Modulation des Querschnitts des Kegelöffnungswinkels α enthält.

**26.** Elektronische Vorrichtung nach einem der Ansprüche 24 oder 25, **dadurch gekennzeichnet, daß** sie Mittel (GAIN) enthält, damit der Übergangsbereich zwischen dem ersten farbigen Hintergrund und dem Objekt durch einen Abstandsbereich zwischen der Oberfläche der den ersten farbigen Hintergrund bestimmenden Kegelöffnung und einer Kegelöffnung α1 größer als α bestimmt ist, mit derselben Symmetrieachse und derselben Spitze wie der den ersten farbigen Hintergrund bestimmende Kegel, und dessen der Spitze gegenüberliegende Fläche in derselben Ebene liegt wie die der Kegelspitze gegenüberliegende, den ersten farbigen Hintergrund bestimmende Fläche.

**27.** Elektronische Vorrichtung nach einem der Ansprüche 24 bis 26, **dadurch gekennzeichnet, daß** sie Mittel enthält zur Abstumpfung eines Abstands d des den ersten farbigen Hintergrund bestimmenden Kegels, daß der Abstand d, der die Koordinate ws, die die Lage der Kegelspitze auf der Symmetrieachse einer Koordinaten W angibt, auf der Symmetrieachse eine untere Luminanzschwelle wb mit einem Wert zwischen ws und wh bestimmt, wobei wh die Abszisse die der der Kegelspitze gegenüberliegende Fläche bestimmenden Ebene ist.

**28.** Elektronische Vorrichtung nach einem der Ansprüche 19 bis 27, **dadurch gekennzeichnet, daß** die Mittel (12) zur Detektion der Bereiche Mittel enthalten, die es ermöglichen, Pixel zu lokalisieren, die den auf den ersten farbigen Hintergrund geworfenen Schatten des Objektes darstellen.

**29.** Elektronische Vorrichtung nach Anspruch 28, **dadurch gekennzeichnet, daß** sie Mittel enthält, die die den Schatten des Objektes darstellenden Pixel auf Schwarz setzen.

**30.** Videomischer, **dadurch gekennzeichnet, daß** er eine elektronische Vorrichtung nach einem der Ansprüche 19 bis 29 enthält.

**31.** Autonome Vorrichtung zum Ausschneiden und zur Überlagerung eines Videobildes, **dadurch gekennzeichnet, daß** sie eine elektronische Vorrichtung nach einem der Ansprüche 19 bis 29 enthält.

**Claims**

**1.** Method of overlaying on a new coloured background (VF) a subject emanating from the clipping of a source video image (VS) consisting of the subject moving against a first coloured background, the said method comprising a step (2) of calculating a clipping key KD making it possible to separate the colour space (CB, CR, Y) representing the said source video image (VS) into three regions, a first region (Z1) defining a volume representing the first coloured background, a second region (Z3) defining a volume representing the subject and a third region (Z2) representing a transition region (Z2) between the first coloured background and the subject, a signal DZ indicating membership or nonmembership of the transition region (Z2), and a mixing step such that the video image VD representing the subject moving against the new coloured background is given by the formula:

$$VD = KD \times \text{subject video} + (1 - KD) \times \text{background video},$$

where subject video and background video respectively represent a video image containing the subject and the video image of the new coloured background, **characterized in that** the video image containing the subject (subject video) emanates from a step (9) of processing the source video image, the said processing step performing the decoloration of the transition region by the addition, to each pixel of the transition region, of a colour complementary to the colour of the said pixel so as to render the said pixel substantially achromic.

**2.** Method according to Claim 1, **characterized in that** the decoloration is such that a blue colour correction (cbc) difference chrominance component and a red colour correction (crc) difference chrominance component are respectively applied to each blue colour difference chrominance component and to each red colour difference chrominance component of each pixel of the transition region.

3. Method according to Claim 2, **characterized in that** the calculation of the said correction chrominance components (cbc, crc) is performed with the aid of the calculation of a decoloration key KA.

4. Method according to Claim 3, **characterized in that** the value of the blue colour correction chrominance component and the value of the red colour correction chrominance component emanate respectively from the product of the quantity $\cos(\beta2)$ times the decoloration key KA and from the product of the quantity $\sin(\beta2)$ times the decoloration key KA, $\beta2$ being equal to $\beta1 + \pi$ where $\beta1$ is the angle making it possible to transform the red colour chrominance axis CR of the colour space (CB, CR, Y) into the Z axis pointing in the direction of the hue of a pixel of the first coloured background.

5. Method according to either of Claims 3 and 4, **characterized in that** the calculation of the decoloration key is such that:

$$KA = z - F|u|,$$

where z and u are the coordinates of each pixel along the respective axes Z and U, the U axis being the axis arising from the rotation of angle $\beta1$ of the blue colour difference chrominance axis CB of the colour space (CB, CR, Y), $|u|$ denoting the absolute value of the coordinate u, F being an adjustment parameter making it possible to modulate the value of the key KA.

6. Method according to any one of Claims 1 to 5, **characterized in that** the processing step (9) comprises a step of blacking out the pixels belonging to the first coloured background.

7. Method according to any one of Claims 1 to 5, **characterized in that** the step (2) of calculating the clipping key KD comprises various calculation steps (23, 24, 25, 26, 27) making it possible to define the volume representing the first coloured background in the form of a cone of aperture angle $\alpha$ whose axis of symmetry (W) passes through the achromic point of zero luminance of the colour space (CB, CR, Y) and a point representing the colour of the first coloured background.

8. Method according to Claim 7, **characterized in that** the polar coordinates r(i) and $\theta(i)$ of the various pixels (Mi) which define a cross section of the cone in a plane (Uo, Vo) such that the trihedral (Uo, Vo, W) is a right-handed trihedral, obey the equation:

$$k^2 \, r(i)^2 \, \cos^2 (\theta(i) + R) + r(i)^2 \, \sin^2 (\theta(i) + R) = \text{constant},$$

where $\theta(i)$ is the polar angle defining the point M(i) in the plane (Uo, Vo), k and R being respectively an elliptical modulation factor for the coordinate r(i) and an angle of rotation of the cross section of the cone.

9. Method according to Claim 8, **characterized in that** the aperture $\alpha$ of the cone is linked with an adjustment parameter CLIP in such a way that:

$$r_e(i) - \alpha \, w(i) = \text{CLIP}$$

where

$$r_e(i) = r(i) \, (A)^{1/2}$$

with

$$A = \sqrt{k^2 \cos^2 (\theta(i) + R + \sin^2(\theta(i) + R))}$$

and where w(i) is the coordinate on the axis of symmetry (W) of the said cone of the plane (Uo, Vo), the face opposite the vertex of the cone being defined by a coordinate wh on the axis of symmetry (W) of the cone.

**10.** Method according to Claim 8 or 9, **characterized in that** the elliptical modulation factor k is such that $0 \leq k \leq 2$, and **in that** the angle R can vary from 0 to $\pi$.

**11.** Method according to any one of Claims 8 to 10, **characterized in that** the transition region (Z2) between the first coloured background and the subject is defined by a region of space included between the surface of the cone of aperture $\alpha$ defining the first coloured background and a cone of aperture $\alpha 1$ greater than $\alpha$, with the same axis of symmetry and the same vertex as the cone defining the first coloured background, and whose face opposite the vertex is in the same plane as the face opposite the vertex of the cone defining the first coloured background.

**12.** Method according to Claim 11, **characterized in that** the size of the transition region can be altered through an adjustment parameter (GAIN).

**13.** Method according to any one of Claims 7 to 12, **characterized in that** the cone defining the first coloured background can be truncated at a distance d separating the coordinate ws giving the position of the vertex of the cone on the axis of symmetry W from a coordinate wb defining, on the said axis of symmetry, a low luminance threshold wb having a value lying between ws and wh.

**14.** Method according to one of Claims 7 to 13, **characterized in that** the clipping key KD arises from an operation of combining a chrominance key KC and a luminance key KL in such a way that:

$$KD = MAX [KC, KL]$$

the luminance key KL having the value 1 for any pixel whose coordinate w(i) on the axis of symmetry of the cone of aperture $\alpha$ is less than wb and the value 0 for any pixel whose coordinate w(i) on the axis of symmetry on the cone of aperture $\alpha$ is greater than wh, and the chrominance key KC having the value 0 for any pixel belonging to the cone of aperture $\alpha$ and the value 1 for any pixel situated beyond the cone of aperture $\alpha 1$.

**15.** Method according to any one of Claims 7 to 14, **characterized in that** the achromic level of the various chrominance components and the zero level of the luminance component which constitute the origin of the frame of reference of the colour space are converted into arithmetic zeros.

**16.** Method according to any one of Claims 1 to 15, **characterized in that** the signal DZ emanating from the step (12) of detecting regions makes it possible to locate pixels representing the subject's shadow cast on the first coloured background.

**17.** Method according to Claim 16, **characterized in that** the step (12) of detecting regions making it possible to deliver the signal DZ comprises the following sequence:

- if the clipping key KD is between 0 and 1, the luminance value y of each pixel M(i) is compared with a threshold value ya and;
- if y is greater than ya, the cue DZ takes a value signifying the detection of the transition region between background and subject;
- if y is less than ya and if the angle $\theta(i)$ is between two values $\theta min$ and $\theta max$ whose difference $\theta max - \theta min$ defines the angular aperture within which the angle $\theta(i)$ must lie in order for the hue of the pixel associated with $\theta(i)$ to be likened to the hue of the first coloured background, the cue DZ takes a value signifying the detection of the shadow;
- if y is less than ya and if the angle $\theta(i)$ is not between the said values $\theta(min)$ and $\theta(max)$, the cue DZ takes a value signifying the detection of the transition region (Z2) between background and subject.

**18.** Method according to any one of the preceding claims, **characterized in that** the clipping key KD emanates from a masking and filtering operation (3).

**19.** Electronic apparatus making it possible to overlay on a new coloured background (VF) a subject emanating from the clipping of a source video image (VS) consisting of the subject moving against a first coloured background, the said apparatus comprising means of calculating a key KD for clipping the said subject, the said key KD making it possible to separate the colour space into three regions, a first region (Z1) defining a volume representing the first coloured background, a second region (Z3) defining a volume representing the subject and a third region (Z2) defining a transition region between the first coloured background and the subject, and means such that the video image VD representing the subject moving against the new coloured background is given by the formula:

$$VD = KD \times \text{subject video} + (1 - KD) \times \text{background video,}$$

where subject video and background video respectively represent a video image containing the subject and the video image of the new coloured background, **characterized in that** it comprises means (9) making it possible to process the said source video image (VS), the said means (9) making it possible to process the source video image comprising:

- means of decoloration of the transition region, the said means of decoloration performing the decoloration by the addition, to each pixel of the transition region, of a colour complementary to the colour of the said pixel so as to render the said pixel substantially achromic, and
- means of detection (12) of regions making it possible to locate the various pixels of the subject video according to their position in the colour space, the means of detection (12) of regions being controlled by the clipping key KD and generating a signal (DZ) making it possible to control the means of decoloration of the transition region.

20. Electronic apparatus according to Claim 19, **characterized in that** it comprises means (10, 11) making it possible to generate a blue colour correction (cbc) difference chrominance component and a red colour correction (crc) difference chrominance component and **in that** the means of decoloration comprise means (14, 15, 16, 17) making it possible to render each pixel of the transition region substantially achromic under the action of the said blue and red colour difference chrominance components.

21. Electronic apparatus according to Claim 20, **characterized in that** the means (10, 11) making it possible to generate a blue colour correction (cbc) difference chrominance component and a red colour correction (crc) difference chrominance component comprise means (OK) of calculating a decoloration key KA.

22. Electronic apparatus according to Claim 21, **characterized in that** the means (OK) of calculating a decoloration key KA are such that:

$$KA = z - F\,|u|,$$

where z and u are the coordinates of each pixel along the respective axes Z and U, the Z and U axes respectively arising from a rotation of angle $\beta 1$ of the axes CR, CB of the colour space (CB, CR, Y), the angle $\beta 1$ being such that the Z axis points in the direction of the hue of a pixel of the first coloured background.

23. Electronic apparatus according to any one of Claims 19 to 22, **characterized in that** the means (9) making it possible to process the source video image (VS) comprise means (19, 20, 21) making it possible to black out the pixels belonging to the first coloured background.

24. Electronic apparatus according to any one of Claims 19 to 23, **characterized in that** the means (2) of calculating the clipping key KD comprise means (23) for calculating the coordinates of each pixel of the colour space in a frame of reference (U, V, W), the frame of reference (U, V, W) being a right-handed trihedral whose centre is the achromic point of zero luminance and whose W axis points towards a point of colour of the first coloured background, and means (24, 25, 26, 27) for defining the volume representing the first coloured background in the form of a cone of aperture angle $\alpha$ having the axis W as axis of symmetry.

25. Apparatus according to Claim 124, **characterized in that** it comprises means (25) for elliptically modulating the cross section of the cone of aperture angle $\alpha$.

26. Apparatus according to either one of Claims 24 and 25, **characterized in that** it comprises means (GAIN) such that the transition region between the first coloured background and the subject is defined by a region of space included between the surface of the cone of aperture $\alpha$ defining the first coloured background and a cone of aperture $\alpha 1$ greater than $\alpha$, with the same axis of symmetry and the same vertex as the cone defining the first coloured background, and whose face opposite the vertex is in the same plane as the face opposite the vertex of the cone defining the first coloured background.

27. Apparatus according to any one of Claims 24 to 26, **characterized in that** it comprises means for truncating at a distance d the cone defining the first coloured background, the said distance d separating the coordinate ws giving the position of the vertex of the cone on the axis of symmetry W from a coordinate wb defining, on the said axis of symmetry, a low luminance threshold wb having a value lying between ws and wh, wh being the abscissa of the plane defining the face opposite the vertex of the cone.

28. Electronic apparatus according to one of Claims 19 to 27, **characterized in that** the means (12) of detecting regions comprise means making it possible to locate pixels representing the subject's shadow cast on the first coloured background.

29. Electronic apparatus according to Claim 28,
**characterized in that** it comprises means for blacking out the said pixels representing the shadow of the subject.

30. Video mixer, **characterized in that** it comprises an electronic apparatus according to any one of Claims 19 to 29.

31. Autonomous video image clipping and overlaying device, **characterized in that** it comprises an electronic apparatus according to any one of Claims 19 to 29.

FIG.1

FIG.2

FIG.3

FIG.4

FIG.5

EP 0 776 135 B1

DÉTECTION
DU SUJET ——— OUI ———⟨ KD = 1 ⟩——— NON

DÉTECTION
DU FOND ——— OUI ———⟨ KD = 0 ⟩——— NON

DÉTECTION
DE LA ZONE
DE TRANSITION

x1       x2                    x3

# FIG.6

FIG.7

FIG.8

FIG.9

FIG.10

FIG.11

**FIG.12**

EP 0 776 135 B1

FIG.13

EP 0 776 135 B1

FIG.14

35